(19) Europäisches Patentamt
European Patent Office
Office européen des brevets

(11) **EP 0 862 773 B1**

(12) **EUROPEAN PATENT SPECIFICATION**

(45) Date of publication and mention
of the grant of the patent:
**17.04.2002 Bulletin 2002/16**

(21) Application number: **97929929.4**

(22) Date of filing: **25.06.1997**

(51) Int Cl.$^7$: **G09F 9/37**

(86) International application number:
**PCT/US97/10124**

(87) International publication number:
**WO 97/50072 (31.12.1997 Gazette 1997/57)**

(54) **TWISTING BALL DISPLAY**

DREHKUGELANZEIGE

AFFICHEUR A BILLES DE TORSION

(84) Designated Contracting States:
**DE FR GB**

(30) Priority: **27.06.1996 US 20522 P**
**13.09.1996 US 713325**
**13.09.1996 US 713935**
**13.09.1996 US 713936**
**13.09.1996 US 716675**

(43) Date of publication of application:
**09.09.1998 Bulletin 1998/37**

(73) Proprietor: **XEROX CORPORATION**
**Stamford, CT 06904-1600 (US)**

(72) Inventor: **CROWLEY, Joseph, M.**
**Morgan Hill, CA 95037 (US)**

(74) Representative: **Rackham, Stephen Neil**
**GILL JENNINGS & EVERY,**
**Broadgate House,**
**7 Eldon Street**
**London EC2M 7LH (GB)**

(56) References cited:
**FR-A- 2 161 301          US-A- 3 694 053**
**US-A- 4 126 854**

• **N. K. SHERIDON ET AL.: "The Gyricon - A**
**Twisting Ball Display" PROCEEDINGS OF THE**
**S.I.D., vol. 18, no. 3/4, 1977, pages 289-293,**
**XP002042263**
• **L.L. LEE: "A Magnetic-Particles Display" IEEE**
**TRANSACTIONS ON ELECTRON DEVICES, vol.**
**ed-22, no. 9, September 1975, US, pages 758-765,**
**XP000561153 cited in the application**

## Description

## Background of the Invention

The invention pertains to visual displays and more particularly to electric twisting-ball displays, such as gyricon displays and the like.

Gyricon displays, also known by other names such as electrical twisting-ball displays or rotary ball displays, were first developed over twenty years ago. See US Pats. No. 4,126,854 and No. 4,143,103, and also "The Gyricon - A Twisting Ball Display", N.K. Sheridon and M.A. Berkovitz, Proceedings of the SID. vol. 18, No. 3/4, 1977, pages 289 to 293.

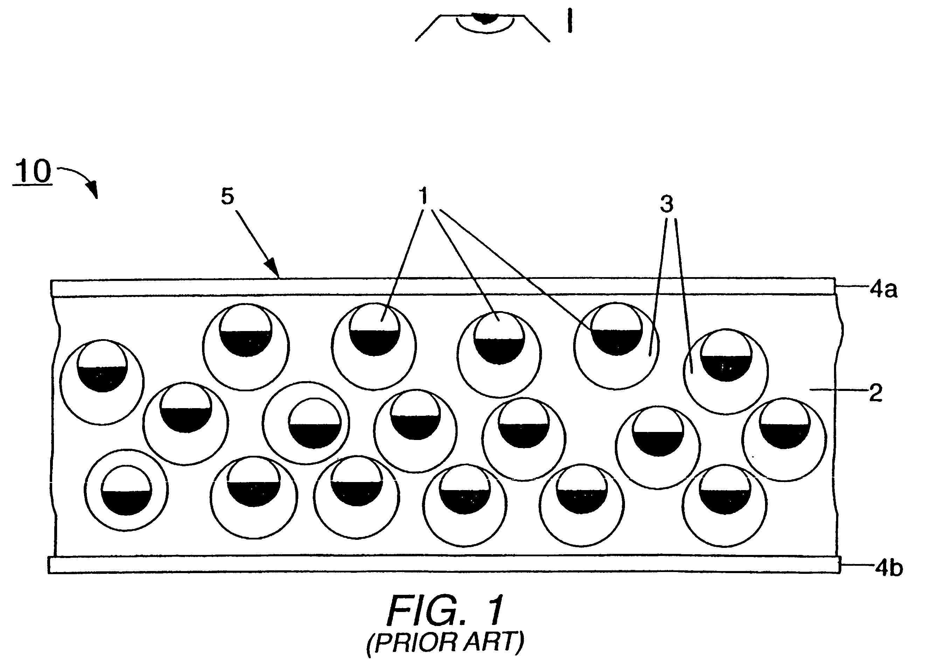

An exemplary gyricon display **10** as disclosed in the above mentioned document **10** is shown in side view of FIG. 1 (PRIOR ART). Bichromal balls **1** are disposed in an elastomer substrate **2** that is swelled by a dielectric fluid creating cavities **3** in which the balls **1** are free to rotate. The balls **1** are electrically dipolar in the presence of the fluid and so are subject to rotation upon application of an electric field, as by matrix-addressable electrodes **4a, 4b.** The electrode **4a** closest to upper surface **5** is preferably transparent. An observer at **I** sees an image formed by the black and white pattern of the balls **1** as rotated to expose their black or white faces (hemispheres) to the upper surface **5** of substrate **2.**

Gyricon displays have numerous advantages over conventional electrically addressable visual displays, such as LCD and CRT displays. In particular, they are suitable for viewing in ambient light, retain an image indefinitely in the absence of an applied electric field, and can be made lightweight, flexible, foldable, and with many other familiar and useful characteristics of ordinary writing paper. Thus, at least in principle, they are suitable both for display applications and for so-called electric paper or interactive paper applications, in which they serve as an electrically addressable, reuseable (and thus environmentally friendly) substitute for ordinary paper. For further advantages of the gyricon, see U.S. Pat. No. 5,389,945, incorporated by reference hereinabove.

Although gyricon displays promise to offer many of the advantages of ordinary paper together with the advantages of electrically addressable displays, the gyricon displays of the prior art have not lived up to their promise. Simply put, these displays do not look as good as paper. In particular, they do not have the high reflectance of paper (typically, 85 percent diffuse reflectance for white paper) and, consequently, do not have the high brightness and contrast characteristics of paper.

Conventional wisdom holds that the best way to improve the reflectance of a gyricon display is to make the display from a thick arrangement of bichromal balls. It is thought that the thicker the arrangement of balls, the better the reflectance and the brighter the appearance of the display. The intuitive analogy here is to ordinary paint: Other things being equal, a thicker coat of white paint reflects more incident light than a thinner coat of paint, and therefore appears brighter and whiter than the thinner coat. By analogy, it is expected that a thick arrangement of bichromal balls will tend to reflect more incident light than a thinner arrangement. In particular, the white faces of bichromal balls located at some distance below the viewing surface of the display are expected to reflect any light that is not reflected by balls located nearest the surface.

Conventional wisdom also suggests that to achieve high resolution in a gyricon display, the cavities in which the balls rotate should be packed as closely together as possible. However, it is conventionally supposed that the size of the balls *within* the cavities is of no consequence insofar as display reflectance is concerned. That is because in a display having a thick arrangement of bichromal balls, the balls located farther from the viewing surface of the gyricon display will "fill in the gaps" between bichromal balls located nearer the viewing surface. In other words, so long as the two-dimensional projection of the balls at all distances from the viewing surface onto the viewing surface substantially covers the viewing surface, a high-quality display will be obtained.

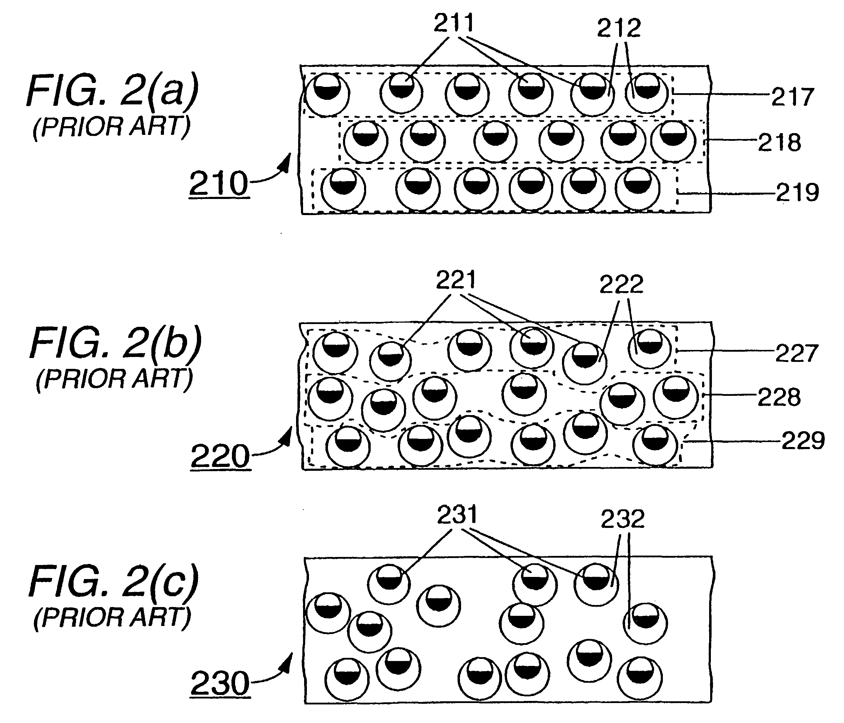

The series of views of FIG. 2 (PRIOR ART) illustrates several different thick arrangements of bichromal balls found in various gyricon displays of the prior art. View (a) shows first arrangement **210,** which is made up of bichromal balls **211** in spherical cavities **212** arrayed so as to form multiple layers **217, 218, 219**. View (b) shows second arrangement **220**, which is made up of bichromal balls **221** in spherical cavities **222** arrayed in wavy layers **227, 228, 229**; as can be seen, the division of second arrangement **220** into layers **227, 228, 229** is somewhat arbitrary. View (c) shows third arrangement **230**, which is made up of bichromal balls **231** in spherical cavities **232** that are not layered at all, but instead are distributed randomly throughout the thickness of arrangement **230**.

A thick display has certain drawbacks. Notably, a thinner display should require a lower drive voltage. Nevertheless, in keeping with the conventional wisdom, virtually all known gyricon displays are made with thick arrangements of bichromal balls (e.g., sheets of bichromal balls wherein the sheets are several ball diameters thick), because this is thought to be necessary in order to produce displays of adequate brightness. The following reference is noteworthy in this regard:

• A paper by Lee entitled "A Magnetic-Particles Display", *IEEE Transactions on Electron Devices,* Vol. ED-22, No. 9, Sept. 1975, pp. 758-765, concerns a *magnetically* activated twisting-ball display. At page 762, under the heading "Resolution, Contrast, and Gray Scale," Lee discusses the contrast provided by single and multiple layers of particles. He proposes that a random packing arrangement of bichromal balls is optimal, and predicts improved reflectance with a double layer (15 to 60 percent reflectance predicted) as opposed to a single layer (0 to 45 percent reflectance predicted).

If the conventional wisdom were correct, a display such as that disclosed by Ishikawa, Saito, Mori, and Tamura of Sony Corporation, in a U.S. Patent issued to these persons (U.S. Pat. No. 4,438,160, hereinafter the '160 patent) and assigned to Sony and further in a paper entitled "A Newly Developed Electrical Twisting Ball Display," *Proceedings of the SID,* Vol 23/4, 1982, pp. 249-253, ought to produce good contrast and brightness. Ishikawa and his colleagues disclose a twisting-ball display having multiple layers of bichromal balls disposed in cavities whose walls touch each other (see '160 patent at col. 6, lines 8-15). They argue that by arranging the balls with a high packing density, high resolution displays can be achieved (see '160 patent at col. 7, lines 10-12).

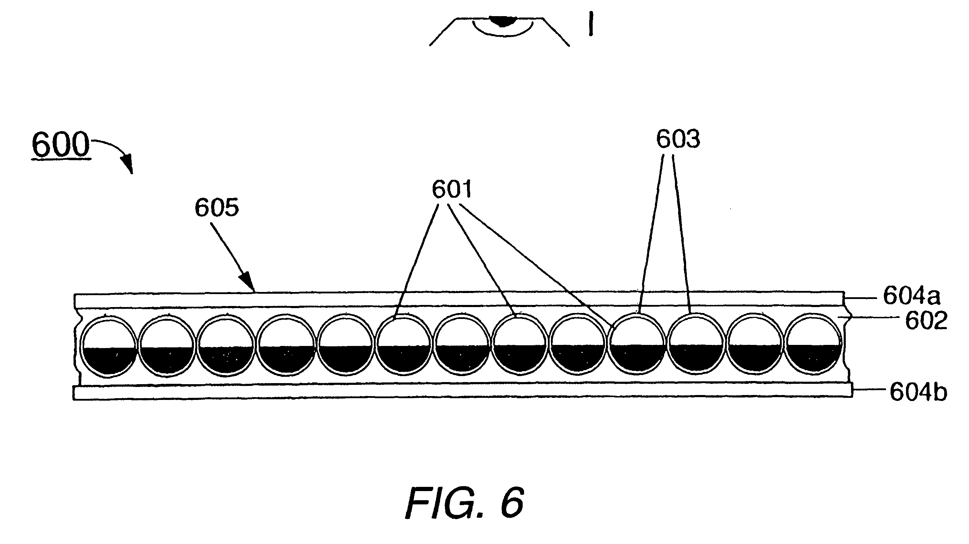

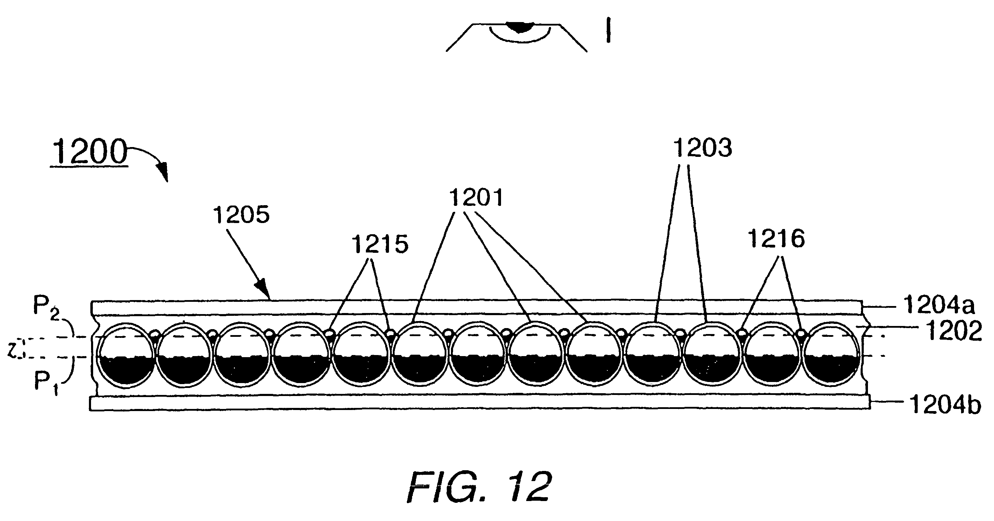

Note that there is no discussion in the '160 patent of the relative sizes of the balls and the cavities. FIG. 6 and FIGS. 12-13 of the '160 patent are not to the contrary. In particular, the specification describing FIG. 6 and FIGS. 12-13 of the '160 patent makes no mention whatsoever of the relative diameters of balls and cavities. Moreover, the technique disclosed for forming the cavities (coating the balls with wax and later dissolving away the wax) suggests that the relative dimensions illustrated in FIG. 6 and in FIGS. 12-13 of the '160 patent are misleading, and that in practice, the cavities will be considerably larger than the balls. The '160 patent does not specify the particular method for deposition of wax on the balls (see '160 patent at col. 4, lines 60-65), but deposition of wax ("resin") by the technique disclosed at page 251 of the Saito et al. paper would produce a wax coating ranging from 5 to 15 microns in thickness, so that the cavity diameter would range from 1.2 to 1.6 times the specified 50-micron ball diameter (see '160 patent at col. 4, line 14; Saito et al. paper at p. 251).

The suggestion that the cavities in the device contemplated by the '160 patent would be substantially larger than the balls they contain is borne out by a photomicrograph of an actual device built according to the principles set forth in the '160 patent. In this photo, which is shown in FIG. 2 on page 250 of the Saito et al. paper, a thick arrangement of bichromal balls with sizeable gaps between the balls located closest to the surface can be seen. Of course, the conventional wisdom teaches that these gaps ought not to matter from the standpoint of display reflectance. The balls located farther from the viewing surface of the gyricon display should effectively "fill in the gaps" between bichromal balls located nearer the viewing surface, so that the quality of the overall display is not impaired. Put differently, it should not matter whether incident light is reflected from balls closest to the viewing surface or from balls situated a greater distance away from the viewing surface, so long as the incident light is reflected somehow.

As it turns out, the display proposed by Ishikawa and his colleagues does not have especially good reflectance properties, at least when compared with ordinary paper. Indeed, to date, known gyricon displays have offered at most about 15 to 20 percent reflectance (as measured when the white faces of all bichromal balls are turned towards the observer).

So a puzzle remains: Why do gyricon displays, even those of high resolution, lack the reflectance, brightness, and contrast qualities predicted by the conventional wisdom? How can a gyricon display be made that has superior reflectance, contrast, and brightness? Without these qualities, the promise of the gyricon display——to make electric paper a working reality instead of a laboratory curiosity——will remain unfulfilled.

**Summary of the Invention**

The invention provides a gyricon display having superior reflectance characteristics comparing favorably with those of white paper.

The invention defies the conventional wisdom that says "a thicker display is brighter," and instead proposes a gyricon display having a tightly packed monolayer of bichromal balls. Within this layer the balls are placed, preferably in a hexagonally packed array, so that adjacent ball surfaces are as close to one another as possible. The light reflected from the inventive gyricon display is reflected substantially entirely from the monolayer of balls, so that lower layers are not needed. By eliminating the lower layers, the display can be made thinner, which in turn provides further advantages, such as lower drive voltage and better resolution due to better control of fringing fields.

In one aspect, the invention provides a material comprising:

an optically transmissive substrate; and a plurality of optically anisotropic particles disposed substantially in a monolayer in the substrate, the particles being closely packed with respect to one another in the monolayer, a rotatable disposition of each particle being achievable while said particle is thus disposed in the substrate, said particle, when in said rotatable disposition, not being attached to the substrate.

A rotatable disposition of each particle is achievable while the particle is thus disposed in the substrate; for example, the particles can already be rotatable in the substrate, or can be rendered rotatable in the substrate by a nondestructive operation performed on the substrate. In particular, the substrate can be made up of an elastomer that is expanded by application of a fluid thereto so as to render the particles rotatable therein. A particle, when in its rotatable disposition, is not attached to the substrate. A display apparatus can be constructed from a piece of the material together with means (such as an electrode assembly) for facilitating a rotation of at least one particle rotatably disposed in the substrate of the piece of material.

In one aspect, the invention may provide a material comprising a substrate and a plurality of optically anisotropic particles disposed in the substrate. The plurality of particles includes first and second populations of particles. Particles of the first population, as considered by themselves without the particles of the second population, are disposed in the substrate in a closely packed (e.g., geometrically regular) arrangement having interstices. Particles of the second population are disposed in the interstices of the arrangement. A rotatable disposition of each particle is achievable while the particle is thus disposed in the substrate; for example, the particles can already be rotatable in the substrate, or can be rendered rotatable in the substrate by a nondestructive operation performed on the substrate. In particular, the substrate can be made up of an elastomer that is expanded by application of a fluid thereto so as to render the particles rotatable therein. A particle, when in its rotatable disposition, is not attached to the substrate. A display apparatus can be constructed from a piece of the material together with means (such as an electrode assembly) for facilitating a rotation of at least one particle rotatably disposed in the substrate of the piece of material.

In one aspect, the invention may provide a material comprising a substrate having a surface and a plurality of optically anisotropic particles disposed in the substrate. The particles situated closest to the substrate surface form substantially a single layer. Each particle in the layer has a center point, with substantially no particle in the layer being disposed entirely behind the center point of any nearest neighboring particle in the layer with respect to the substrate surface. Each particle in the layer has a projected area with respect to the substrate surface, the particles of the set being sufficiently closely packed with respect to one another in the layer that the union of their projected areas exceeds two-thirds of the area of the substrate surface. A rotatable disposition of each particle is achievable while the particle is thus disposed in the substrate; for example, the particles can already be rotatable in the substrate, or can be rendered rotatable in the substrate by a nondestructive operation performed on the substrate. In particular, the substrate can be made up of an elastomer that is expanded by application of a fluid thereto so as to render the particles rotatable therein. A particle, when in its rotatable disposition, is not attached to the substrate. A display apparatus can be constructed from a piece of the material together with means (such as an electrode assembly) for facilitating a rotation of at least one particle rotatably disposed in the substrate of the piece of material.

In one aspect, the invention may provide a material comprising a substrate having a surface and a plurality of optically anisotropic particles disposed in the substrate. Each particle has an optically reflective component region. Each particle has a preferred rotational orientation wherein the reflective region of the particle is proximate to the substrate surface. A rotatable disposition of each particle is achievable while the particle is thus disposed in the substrate. A particle, when in its rotatable disposition, is not attached to the substrate. Particles are arranged in the substrate such that when a light susceptible to reflection by the reflective regions of the particles is incident on a portion of the substrate surface so as to illuminate therethrough those particles located in a vicinity thereof while those particles are rotationally oriented in their preferred orientations, the illuminated particles modulate the light that illuminates them such that at least 15 percent (and more preferably, at least 30 percent; and still more preferably, at least 40 percent; etc.) of the light incident on said portion of the surface is ultimately reflected (e.g., diffusely reflected) back through the substrate surface as measured by an integrating sphere technique.

In one aspect, the invention may provide a gyricon or twisting-ball display in which optically anisotropic particles, such as bichromal balls, are disposed directly in a working fluid, such as a dielectric liquid, without an elastomer substrate or other cavity-containing matrix. The display apparatus has an optically transmissive viewing surface, behind which the working fluid is disposed with the particles in it. The particles are arranged in a closely packed stable arrangement in which neighboring particles tend to keep one another in place. For example, the particles can be arranged in a hexagonally packed monolayer. The working fluid does not substantially constrain the particles to remain in the stable arrangement, notwithstanding the direct contact of the fluid with the particles.

The invention will be better understood with reference to the following description and accompanying drawings, in which like reference numerals denote like elements.

**Brief Description of the Drawings**

FIG. 1 is an exemplary gyricon display of the PRIOR ART;

FIG. 2 is a series of views showing perfectly layered, imperfectly layered, and nonlayered (random) ball arrangements in gyricon displays of the PRIOR ART;

FIG. 3 is a series of views exemplifying light scattering pathways for each of several individual gyricon balls according to the light rectifier model;

FIG. 4 is a series of views exemplifying light scattering pathways in a gyricon display according to the light rectifier model;

FIG. 5 is a series of views contrasting exemplary light pathways in an ideal close-packed monolayer gyricon display, a high-quality close-packed monolayer gyricon display, a non-close-packed monolayer gyricon display, and a non-monolayer gyricon display with a close-packed top layer;

FIG. 6 illustrates a side view of a gyricon display of the present invention in an embodiment wherein the gyricon balls are arrayed in a close-packed monolayer;

FIG. 7 illustrates a side view of a gyricon display of the present invention in an alternative embodiment wherein the gyricon balls are arrayed in multiple layers with a close-packed monolayer as the layer closest to the viewing surface;

FIG. 8 illustrates a top view of a gyricon display of the present invention in an embodiment wherein the gyricon balls nearest the viewing surface are arrayed in a close-packed hexagonal formation;

FIGS. 9 and 10 illustrate top views of gyricon displays of the present invention in alternative embodiments wherein the gyricon balls are arrayed, respectively, in a close-packed rectangular formation and in a close-packed rhomboidal (diamond-shaped) formation;

FIG. 11 is a series of views illustrating examples of gyricon displays each having two different populations of bichromal balls, with smaller-diameter bichromal balls filling the interstices in an ideal close-packed monolayer of larger-diameter bichromal balls;

FIG. 12 illustrates a side view of a gyricon display of the present invention in an embodiment wherein relatively large gyricon balls are arrayed in a close-packed formation, and relatively small gyricon balls fill the interstices of the formation;

FIG. 13 illustrates a top view of a gyricon display of the present invention in an embodiment wherein relatively large gyricon balls are arrayed in a close-packed hexagonal formation, and relatively small gyricon balls fill the interstices of the formation;

FIG. 14 is a series of views contrasting the fringing fields in thick gyricon displays with the fringing fields in monolayer gyricon displays;

FIG. 15 is a photomicrograph of a thick gyricon display;

FIG. 16 illustrates an example of the areal coverage fraction $\alpha$;

FIG. 17 is a series of views showing the relationships among center-to-center spacing, ball diameter, and cavity size;

FIGS. 18-20 illustrates the calculation of the areal coverage fraction $\alpha$ in, respectively, hexagonally, rectangularly, and rhomboidally (diamond) packed monolayer geometries of uniform bichromal spheres; and

FIG. 21 illustrates an alternative embodiment of the invention in which a close-packed monolayer of gyricon balls is placed in a fluid directly between transparent electrodes, without an elastomer or other cavity-containing substrate medium.

## Detailed Description

Bichromal balls have a light side and a dark side. The research leading to the present invention can be thought of (with apologies to George Lucas) as an exploration of the dark side. This research shows why the conventional wisdom that "thicker is brighter" fails, and offers in its place a new, more effective model of light propagation in a gyricon display, called the *light rectifier* model. The new model, in turn, motivates the proposed close-packed monolayer gyricon display according to the invention.

For clarity of exposition, the discussion of the light rectifier model that follows focuses on the model proper and, except as otherwise noted (e.g., in the parameter *K* of the reflectance equations (1) through (3) below), neglects other optical effects not directly pertinent to the model, such as light refraction at boundaries between substances having different refractive indices.

### *Light Rectifier Model*

Typically, the bichromal balls used in a gyricon display are white on one hemispherical surface and black on the other. When a portion of the display is in the "white" state, the balls therein are oriented so that their white hemispheres face up (that is, face toward the viewing surface of the display, so as to be visible to an observer located above the display as is the observer at **I** in FIG. 1). Light coming in from above the display is diffusely scattered in many directions from the tops of the balls.

More particularly, when light strikes a given point on the white hemisphere of a given ball, scattering takes place at all angles bounded by the tangent plane (a plane tangent to the surface of the ball at the point where the light strikes the ball). For a point at the top of the ball, this means that all light is scattered backward. If no other balls are between the given ball and the viewing surface of the gyricon display, light scattered from the top of the ball is free to return outward from the viewing surface and so contributes toward observed whiteness of the display. However, if there are other balls between the given ball and the viewing surface, light scattered from the top of the ball cannot leave the display immediately, because the scattered light is partly intercepted by the black hemispherical surfaces of balls above it. The bottom surfaces are black, so this light is immediately absorbed. Thus much of the light which reaches the lower layers of balls is lost forever.

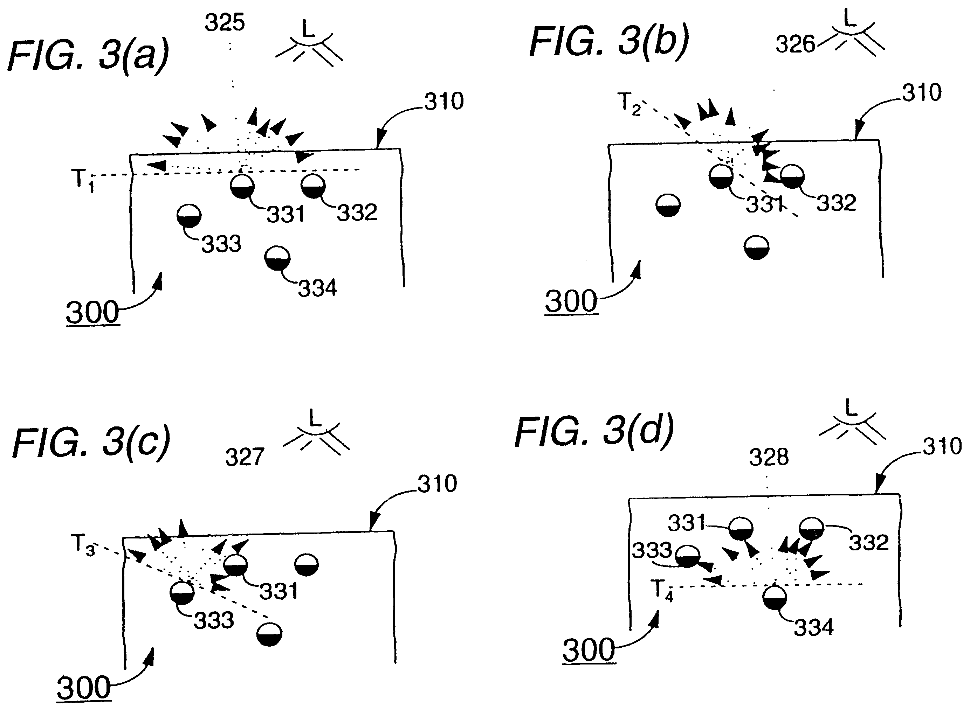

FIG. 3 illustrates these ideas. Each of the series of views **(a)**, **(b)**, **(c)**, **(d)** in FIG. 3 shows a portion of gyricon display **300** including bichromal balls **331, 332, 333,** and **334,** all of which are turned so that their white hemispheres face up towards transparent viewing surface **310.** Light rays from a light source **L** pass through viewing surface **310** to be scattered by the white hemispheres of the bichromal balls. In view **(a)** light ray **325** strikes a point at the very top of ball **331** and is scattered in all directions bounded by tangent plane **T₁**. Almost all the scattered light can return through surface **310**. In view **(b)** ray **326** strikes a point farther down ball **331** and is scattered in all directions bounded by tangent plane **T₂**. Although most of the scattered light can return through surface **310**, some of it is scattered downward and is absorbed by the black hemisphere of ball **332**.

Continuing in FIG. 3, in view **(c)** ray **327** strikes a point on ball **333** and is scattered in all directions bounded by tangent plane **T₃**. Although there are no other balls between ball **333** and surface **310**, the white hemisphere of ball **333** is below the black hemispheres of other balls, such as ball **331**. A substantial portion of the scattered light is absorbed by the black hemispheres of ball **331** and other balls situated above ball **333** with respect to surface **310**. In view **(d)** ray **328** strikes the top of ball **334** and is scattered in all directions bounded by tangent plane **T₄**. Ball **334** is below several other balls in the display, including balls **331, 332,** and **333**. Most of the light scattered from white hemisphere of ball **334** is absorbed by the black hermispheres of these other balls, and very little escapes through surface **310**.

In short, a conventional gyricon display in the "white" state acts as a light rectifier (analogous to an electrical rectifier). Light entering the device can pass downward easily, but cannot travel back upward without being absorbed. Put another way, once light goes in, in most cases it can't come out. Thus, any light that travels past the upper hemisphere of the topmost bichromal balls without being reflected is unlikely to escape the device. Adding bichromal balls below the topmost ones will contribute only minimally to overall display reflectance.

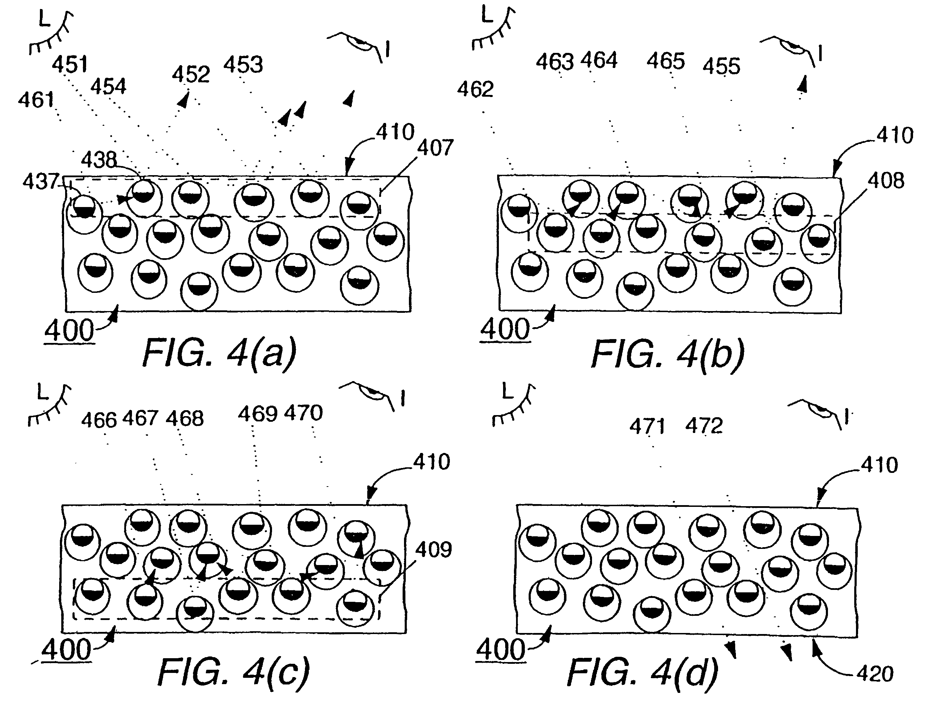

FIG. 4 illustrates various exemplary pathways for scattered light rays in gyricon displays according to the light rectifier model. (For clarity, only selected exemplary scattering pathways are shown; it will be understood that, as in FIG. 3, each light ray incident on the white hemisphere of a ball scatters at all angles bounded by the tangent plane at the point of incidence.) Each of the series of views **(a), (b), (c), (d)** in FIG. 4 shows a portion of gyricon display **400,** which is illuminated by light from diffuse illumination source **L**. The bichromal balls **407, 408, 409** in display **400** are turned so that their white hemispheres are exposed to an observer at **I**. Balls **407** can be said to be the top or first layer of balls in display **400**, balls **408** can be said to be the second layer, and balls **409** the third layer.

In view **(a)** of FIG. 4, light rays **451, 452, 453, 454, 461** are incident on the topmost balls **407**. No other balls lie between balls **407** and transparent viewing surface **410**. Rays **451, 452,** and **453** scatter immediately back to the observer at **I**. Ray **454** scatters from one ball and onto the white hemisphere of another ball, and thence back to the observer at **I**. Ray **461** strikes ball **437,** a ball whose white hemisphere is somewhat lower than the black hemispheres of most of the other topmost balls **407**. Ray **461** scatters off the white hemisphere of ball **437** and is absorbed by the black hermisphere of ball **438**.

According to the light rectifier model, most of the light rays incident on topmost balls **407** (such as rays **451, 452, 453,** and **454**) are reflected so as to be visible to the observer at **I**; only a small portion of the rays incident on topmost balls **407** (for example, ray **461**) are lost to absorption. Absorptive losses are more substantial for balls (such as ball **437**) that are situated below, rather than at the same depth as, the other balls in the top layer, and are particularly large for balls whose reflective white hemispheres lie below the absorptive black hemispheres of neighboring balls.

Continuing in FIG. 4, in view **(b)** light rays **462, 463, 464, 465, 455** are incident on balls **408**. Some of these rays, such as rays **463, 465,** and **455,** travel directly from light source **L** to balls **408** while others, such as rays **462** and **464,** arrive indirectly after being scattered from topmost balls **407,** which lie between balls **408** and transparent viewing surface **410**. Rays **462, 463, 464,** and **465** each scatter from the white hemisphere of one of the second-layer balls **408,** but are then absorbed by the black hemispheres of topmost balls **407,** and so do not escape to surface **410**. Thus these rays **462, 463, 464, 465** are not visible to the observer at **I**. A few rays, such as ray **455,** do escape to surface **410** and so are visible to the observer at **I**, but according to the light rectifier model such rays are the exception, not the rule. Most of the light rays incident on second-layer balls **408** are lost to absorption by topmost balls **407,** and so second-layer balls **408** appear relatively dark to the observer at **I**.

In view **(c)** of FIG. 4, light rays **466, 467, 468, 469, 470** are incident on balls **409**. Some of these rays, such as rays **466** and **467,** travel directly from light source **L** to balls **409** while others, such as rays **468, 469** and **470,** arrive indirectly after being scattered from topmost balls **407** or second-layer balls **408,** both of which lie between balls **409** and transparent viewing surface **410**. Rays **466, 467, 468, 469, 470** each scatter from the white hemisphere of one of the third-layer balls **409,** but are then absorbed by the black hemispheres of topmost balls **407** or second-layer balls **408,** and so do not escape to surface **410**. Thus none of rays **466, 467, 468, 469, 470** is visible to the observer at **I**. Almost all of the light rays incident on third-layer balls **409** are lost to absorption by balls in upper layers, and so the third-layer balls **409** appear quite dark to the observer at **I**.

Finally, in view **(d)** of FIG. 4, light rays **471, 472** pass entirely through gyricon display **400** without encountering any of balls **407, 408,** or **409**. These rays pass through gaps between the balls and are not reflected (e.g., they are absorbed behind rear surface **420** of the display). Thus they are not visible to the observer at **I**.

### *Monolayer Gyricon Displays*

According to the light rectifier model, light rays not reflected by the white hemispheres of the topmost balls of a gyricon display (and, more particularly, by balls whose white hemispheres are not below the black hemispheres of other balls) are very likely to be lost to absorption.

According to the invention, the light rectifier properties inherent in conventional gyricon displays can be overcome by constructing a gyricon display in which all the bichromal balls are disposed in a single layer, at the same depth from the viewing surface, and packed as closely together as possible within that layer. In such a display, when white ball hemispheres are presented to the observer, the light rays that are reflected towards the viewing surface do not penetrate the display beyond the upper hemisphere of the single layer of balls. By packing the balls closely together, the amount of light that is reflected from the single layer is maximized, and the amount that is absorbed by the black hemispheres of the balls or is transmitted through the display without reflection is minimized.

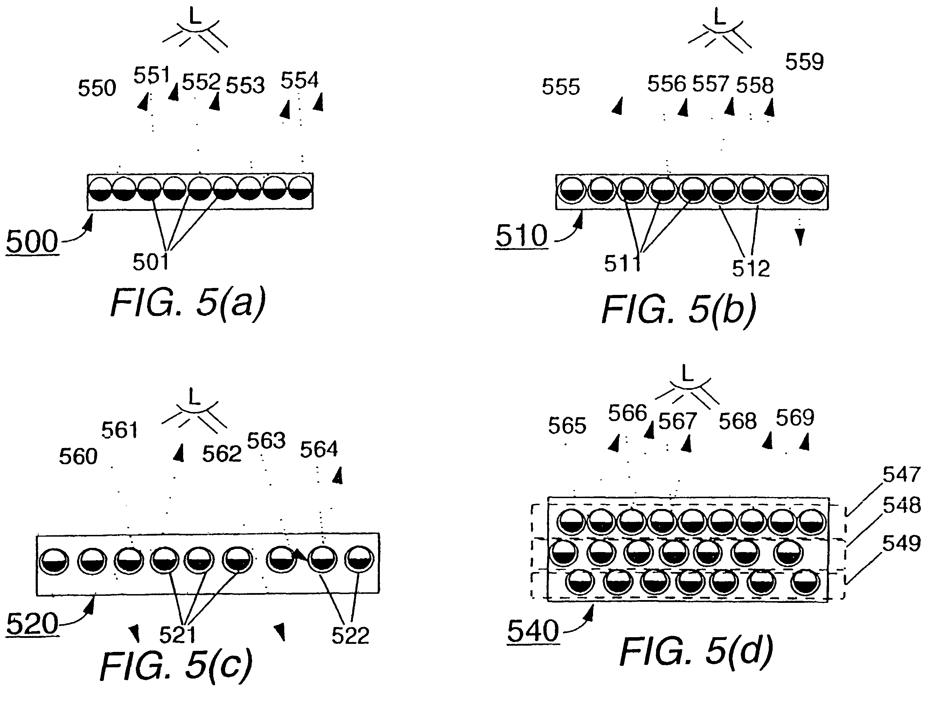

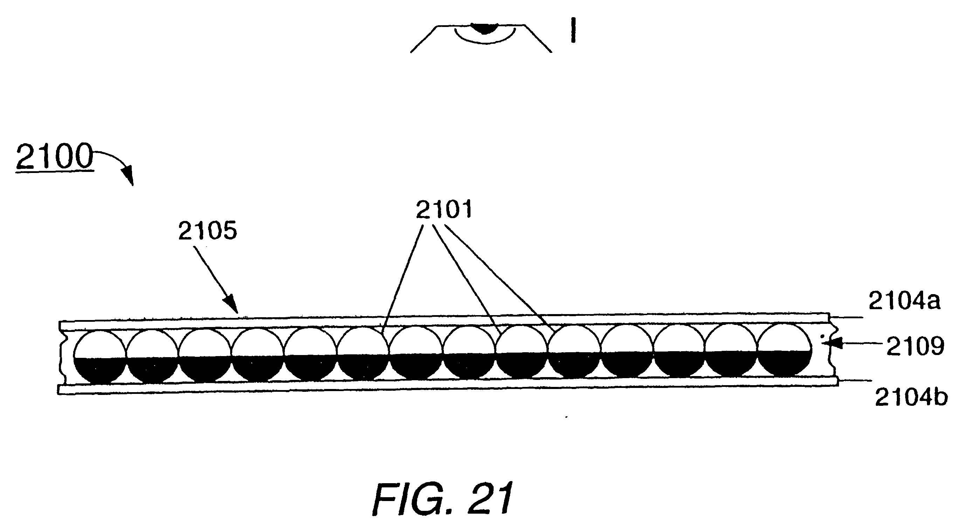

FIG. 5 illustrates exemplary light scattering pathways in various gyricon displays. (For clarity, as in FIG. 4, only selected pathways are shown.) View **(a)** shows an ideal close-packed monolayer gyricon display **500** with bichromal balls **501**. The surfaces of neighboring balls touch each other, or come as close as possible to touching each other as is consistent with proper ball rotation. The only gaps between balls **501** are the spaces that inherently arise when spheres are packed into a planar array. Preferably, to minimize these gaps, a hexagonal array is used. Display **500** can be built by placing the balls **501** directly in the dielectric fluid without an elastomer, as will be described below with reference to FIG. 21. Rays **550, 551, 552, 553,** and **554** from diffuse light source **L** scatter from the upper white hemispheres of balls **501** and back out of display **500,** thereby contributing to the observable brightness of the display.

Continuing in FIG. 5, view **(b)** shows a high-quality (i.e., high-brightness) close-packed monolayer gyricon display **510,** in which bichromal balls **511** rotate within cavities **512**. Cavities **512** can be formed, for example, by the swelled-elastomer techniques used in constructing conventional gyricon displays. Bichromal balls **511** are preferably disposed in a planar hexagonal array, and cavities **512** are made as small as possible with respect to balls **511**. Also, cavities **512** are placed as close to one another as possible, preferably with the walls between neighboring cavities being made as thin as possible and ideally approaching zero thickness. Thus the gaps between balls **511** are minimized. Rays **555, 556, 557, 558,** and **559** from diffuse light source **L** scatter from the upper white hemispheres of balls **511.** Most of the incident rays are scattered back out of the display so as to contribute to display brightness. A few pass through the gaps between balls **511** without being reflected (e.g., ray **559**) or are absorbed by black hemispheres of balls **511** (not shown).

Further in FIG. 5, view **(c)** shows a monolayer gyricon display **520** of lesser quality, in which the bichromal balls are not as closely packed as in displays **500** and **510**. Balls **521** rotate within cavities **522;** the spacing between adjacent cavities is relatively large with respect to the ball diameter. Therefore, more light is lost than in displays **500** and **510**. Rays **560** and **562** pass through the gaps between balls **521,** and ray **563** is scattered so as to be absorbed by the black hemisphere of one of balls **521.** In general, the farther apart the balls **521** are spaced, the greater the losses due to transmission through the display and and absorption of sideways-scattered light by the black hemispheres of the bichromal balls. The spacing between neighboring bichromal balls can be large either because of large-sized cavities or, as shown in view **(c),** large spaces between adjacent cavities.

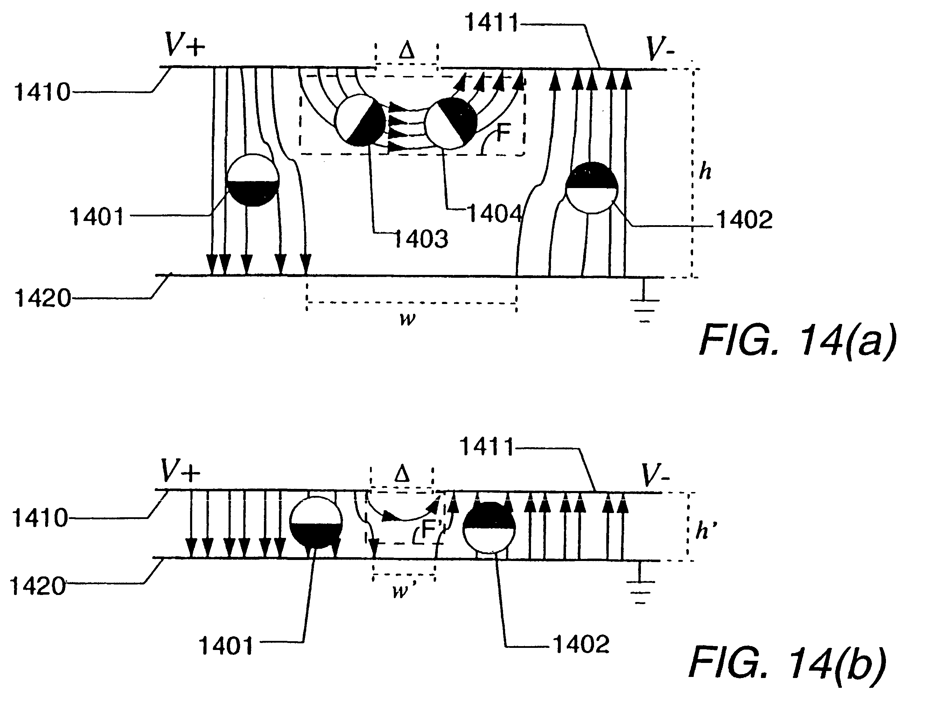

View **(d)** of FIG. 5 illustrates an alternative embodiment of the invention that provides an alternative solution to the light rectifier problem. Gyricon display **540** has a thick arrangement of bichromal balls including top layer **547,** middle layer **548,** and bottom layer **549**. The balls in top layer **547** are close-packed in the same way as the balls **511** in the single layer of display **510** (from view **(b)**). The balls in layers **548** and **549** are not close-packed. However, almost all the light observably reflected from display **540** is reflected from the upper white hemisphere of balls in top layer **547,** so layers **548** and **549** do not contribute substantially to the reflectance of display **540.** Thus the reflectance of display **540** is about as good as that of display **510.** Even so, for reasons discussed below with reference to FIG. 14, the thinner display **510** is to be preferred over the thicker display **540.**

To summarize: According to the light rectifier model, light incident on the viewing surface of a gyricon display must be reflected by the white hemispheres of the topmost bichromal balls if it is to contribute to observable display brightness. Any light not so reflected is effectively trapped inside the gyricon display, because it is absorbed by the black hemispheres of the bichromal balls before it can reach the surface, or because it passes through the display without being reflected at all. Although a small amount of the light scattered by the white hemispheres of balls in lower layers manages to reach the surface, the observed low reflectance of conventional gyricon displays, which cannot be accounted for even when other known light-loss mechanisms are taken into consideration, suggests that the amount of light that does escape is quite small. To overcome the reflectance limitations of conventional gyricon displays, according to the invention a gyricon display is built that does not act as a light rectifier. In the "white" state, the inventive display reflects entirely from the topmost layer of bichromal balls and, more particularly, from the white hemispherical upper surfaces of the topmost layer of balls. In a preferred embodiment, the inventive display is constructed with a single close-packed monolayer of bichromal balls.

### *Examples of Specific Embodiments*

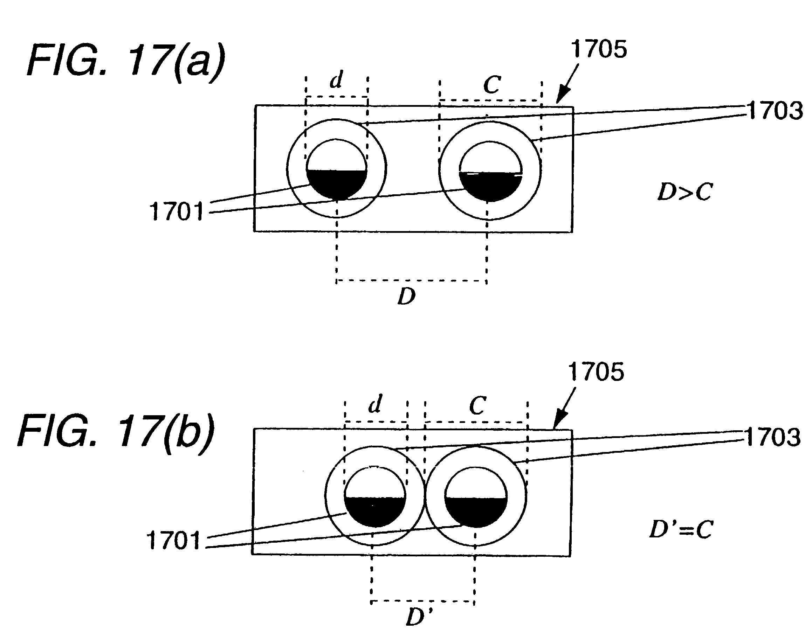

FIGS. 3-5 depict their respective gyricon displays in simplified form, so that the light pathways therein can be clearly seen. FIG. 6 provides a more detailed side view of a gyricon display **600** of the invention in a specific embodiment. In display **600,** bichromal balls **601** are placed as close to one another as possible in a monolayer in elastomer substrate **602.** Substrate **602** is swelled by a dielectric fluid (not shown) creating cavities **603** in which the balls **601** are free to rotate. The cavities **603** are made as small as possible with respect to balls **601,** so that the balls nearly fill the cavities. Also, cavities **603** are placed as close to one another as possible, so that the cavity walls are as thin as possible. Preferably, balls **601** are of uniform diameter and situated at a uniform distance from upper surface **605.** It will be appreciated that the arrangement of balls **601** and cavities **603** in display **600** is comparable to that of balls **511** and cavities **512** in display **510** shown in view (b) of FIG. 5. It will further be appreciated that the arrangement of balls **601** and cavities **603** in display **600** minimizes both the center-to-center spacing and the surface-to-surface spacing between neighboring bichromal balls. (A more detailed discussion of the relative dimensions of the balls and the cavities within which they rotate will be provided below with reference to FIG. 17.)

Balls **601** are electrically dipolar in the presence of the dielectric fluid and so are subject to rotation upon application of an electric field, as by matrix-addressable electrodes **604a, 604b.** The electrode **604a** closest to upper surface **605** is preferably transparent. An observer at **I** sees an image formed by the black and white pattern of the balls **601** as rotated to expose their black or white hemispheres to the upper surface **605** of substrate **602.**

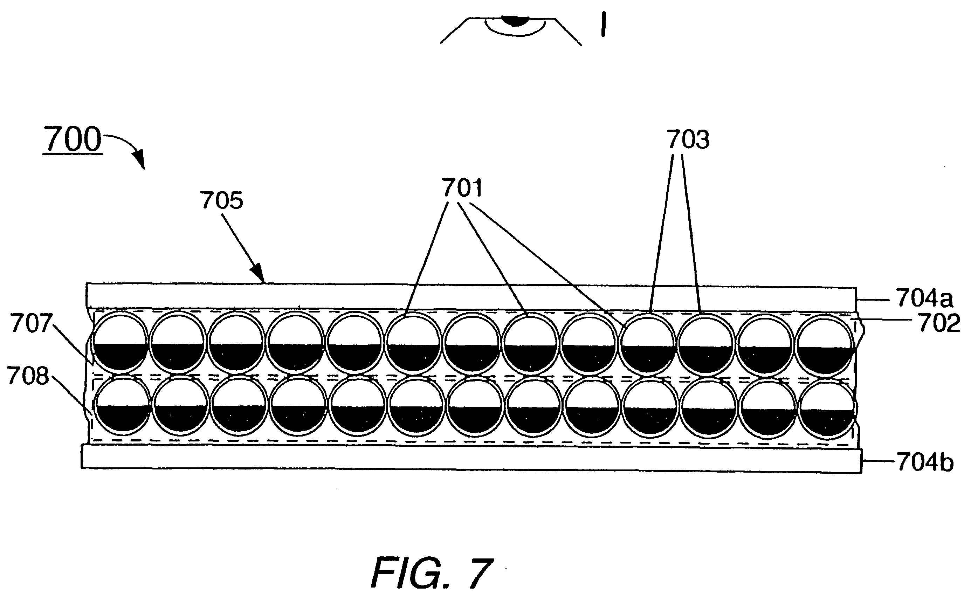

FIG. 7 shows a side view of a gyricon display **700** of the invention in an alternative embodiment. In display **700,** bichromal balls **701** are in a top layer **707** and additional lower layers (here represented by second layer **708**). Balls in top layer **707** are placed as close to one another as possible in a monolayer. Elastomer substrate **702** is swelled by a dielectric fluid (not shown) creating cavities **703** in which the balls **701** are free to rotate. Cavities **703** are made as small as possible with respect to balls **701,** and particularly with respect to balls in top layer **707,** so that these balls nearly fill the cavities. Also, cavities **703** are placed as close to one another as possible, so that the cavity walls are as thin as possible. Preferably, balls in top layer **707** are of uniform diameter and are situated at a uniform distance from upper surface **705.** It will be appreciated that the arrangement of balls and cavities in top layer **707** of display **700** is comparable to that of balls and cavities in top layer **547** in display **540** shown in view **(d)** of FIG. 5. It will further be appreciated that almost all the light reflected from display **700** so as to be observable to an observer at **I** is reflected from the white hemispheres of balls in top layer **707.** At least for top layer **707,** the arrangement of balls **701** and cavities **703** in display **700** minimizes both the center-to-center spacing and the surface-to-surface spacing between neighboring bichromal balls. Preferably, balls in the lower layers (such as layer **708**) are also close-packed insofar as possible, in order to minimize display thickness.

Balls **701** are electrically dipolar in the presence of the dielectric fluid and so are subject to rotation upon application of an electric field, as by matrix-addressable electrodes **704a, 704b.** The electrode **704a** closest to upper surface **705** is preferably transparent. An observer at **I** sees an image formed by the black and white pattern of the balls **701** as rotated to expose their black or white hemispheres to the upper surface **705** of substrate **702.**

In general, monolayer display **600** of FIG. 6 is preferable to the thicker display **700** of FIG. 7, for reasons discussed below with reference to FIG. 14. According to the light rectifier model, the lower layers, such as layer **708,** contribute little or nothing to observable display reflectance. Note in particular that the white hemispheres of balls in lower layer **708** are situated so that any light that does reach them is most likely to be scattered into the absorptive dark sides of balls in top layer **707.** Nevertheless, there can be situations where a display such as display **700** is preferred, for example, if such a display can be manufactured at less expense.

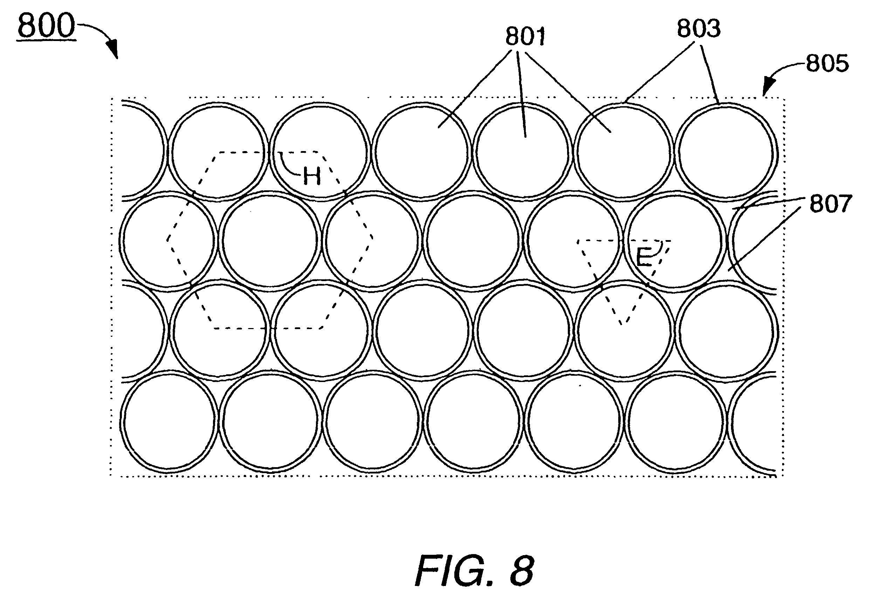

To maximize the closeness of packing of the bichromal balls in the monolayer of display **600** or the close-packed top layer of display **700,** a hexagonal packing geometry is preferred. FIG. 8 illustrates this geometry. A top view of a portion of a gyricon display **800** of the invention is shown, with the white hemispheres of the balls **801** visible through transparent viewing surface **805.** Balls **801** rotate in cavities **803,** which cavities are preferably as small and close together as possible. The centers of balls **801** form a hexagonal pattern as shown by exemplary hexagon **H;** that is, the centers of close neighboring balls form equilateral triangles, as shown by exemplary equilateral triangle **E.** Interstices **807** occur as a result of the geometry (packed spheres cannot cover a plane entirely).

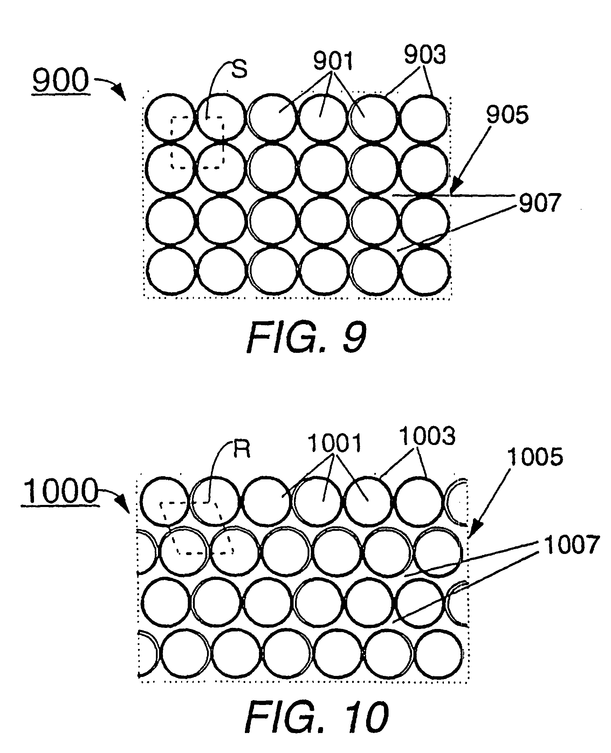

FIGS. 9-10 illustrate alternative packing geometries. These geometries are less preferred than the hexagonal geometry of FIG. 8, because they cover a smaller proportion of the plane than is covered by the hexagonal geometry. FIG. 9 shows a rectangular geometry. A portion of gyricon display **900** has bichromal balls **901** in cavities **903.** The white hemispheres of balls **901** are visible through viewing surface **905.** The rectangular geometry is shown by exemplary square **S** formed by the centers of balls **901.** Interstices **907** are left unfilled by the packing geometry. FIG. 10 shows a rhomboidal (diamond-shaped) geometry. A portion of gyricon display **1000** has bichromal balls **1001** in cavities **1003.** The white hemispheres of balls **1001** are visible through viewing surface **1005.** The rhomboidal geometry is shown by exemplary rhombus **R** formed by the centers of balls **1001.** Interstices **1007** are left unfilled by the packing geometry.

### *Two-Population Close-Packed Gyricon Displays*

A monolayer planar array of spheres of uniform diameter inevitably has interstices between the spheres, even if the sphere surfaces touch one another. In FIG. 8, interstices 807 are formed by the hexagonal packing geometry. In FIG. 9, interstices 907 are formed by the rectangular packing geometry. In FIG. 10, interstices 1007 are formed by the rhomboidal packing geometry. According to the light rectifier model, light that passes through the interstices into the depths of the display is essentially lost.

To prevent light loss through interstices in the planar array, according to the invention in another embodiment a gyricon display is constructed from two populations of bichromal balls. Preferably, balls in the first, or main, population are of a first uniform diameter and balls in the second, or interstitial, population are of a second uniform diameter, with the second diameter chosen so that the balls in the second population can fill the interstices left by close-packing the balls from the first population.

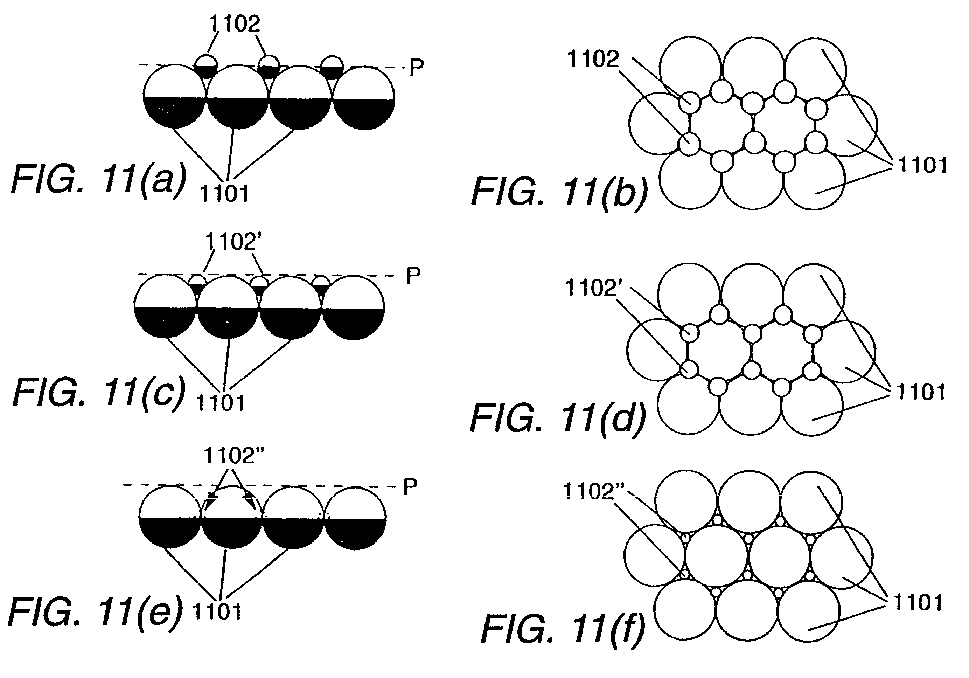

FIG. 11 provides some examples of these ideas. Each of the series of views in FIG. 11 illustrates a hexagonally packed planar array of bichromal balls **1101** with various smaller bichromal balls being used to fill the interstices of the array. The white hemispheres of balls **1101** face upwards, and their topmost points lie in a plane **P.** Views **(a)** and **(b)** show, respectively, side and top views of the array of bichromal balls **1101.** Smaller bichromal balls **1102** are situated above balls **1101** (that is, closer to the viewing surface of the gyricon display) in the interstices formed by the hexagonal packing arrangement. Balls **1102** also have their white hemispheres facing upwards. Balls **1102** are of a diameter such that the plane that separates their white and black hemispheres is plane P. Views **(c)** and **(d)** show, respectively, side and top views of the array of bichromal balls **1101,** with smaller bichromal balls **1102'** situated above balls **1101** in the interstices formed by the hexagonal packing arrangement. Balls **1102'** are of a diameter such that their topmost points lie in plane P. Views **(e)** and **(f)** show, respectively, side and top views of the array of bichromal balls **1101,** with smaller bichromal balls **1102"** situated above balls **1101** in the interstices formed by the hexagonal packing arrangement. (In view **(e),** balls **1102"** are hidden by balls **1101** and, accordingly, are shown as dashed outlines.) Balls **1102"** are of a diameter such that their surfaces are tangential to the surfaces of balls **1101** when their centers are coplanar with the centers of balls **1101,** as shown.

Preferably, as shown in all the examples of FIG. 11, interstitial balls are situated in a planar array above the planar array of the main bichromal balls. That is, the plane formed by the centers of the smaller balls is closer to the viewing surface than the plane formed by the centers of the monolayer (or close-packed top layer) of larger balls. With this arrangement, light reflected from the white hemispheres of the interstitial balls is not absorbed by the black hemispheres of the main bichromal balls, as would be the case if the interstitial balls were disposed below the layer of larger balls.

Further as shown in FIG. 11, the interstitial balls preferably are small enough so that their black hemispheres do not absorb much of the light reflected by the white hemispheres of the main bichromal balls. In this regard, a tradeoff can be made between losses due to absorption by the black hemispheres of the interstitial balls and losses due to passage of light through unfilled portions of the interstices. In views **(a)** and **(b)** of FIG. 11, balls **1102** almost completely fill the interstices between balls **1101.** However, some of the light scattered from the white hemispheres of balls **1101** is absorbed by the black hemispheres of balls **1102.** (Note that plane P, which is the tangent plane for the tops of balls **1101,** is also the plane separating the black and white hemispheres of the interstitial balls **1102.** Thus none of the light scattered from the very tops of balls **1101** is absorbed by the black hemispheres of balls **1102.** This would not be so if balls **1102** were made any larger.) In views **(c)** and **(d)** of FIG. 11, balls **1102'** largely fill the interstices between balls **1101.** Some of the light scattered from the white hemispheres of balls **1101** is absorbed by the black hemispheres of balls **1102',** but less so than for interstitial balls **1102** in views **(a)** and **(b).** This is because balls **1102',** being smaller than balls **1102,** can be situated with their centers below plane P, so that light scattered by the white hemispheres of balls **1101** is less likely to reach the black hemispheres of balls **1102'** than the black hemispheres of balls **1102.** In views **(e)** and **(f)** of FIG. 11, balls **1102"** only partly fill the interstices between balls **1101.** Balls **1102"** are situated with their centers in the same plane as the centers of balls **1101,** so very little of the light scattered from the white hemispheres of balls **1101** is absorbed by the black hemispheres of balls **1102".** However, light can pass through the portions of the interstices between balls **1101** that are left unfilled by balls **1102".** Therefore, with interstitial balls **1102",** more light is transmitted beyond the white hemispheres of balls **1101** than is the case with the larger interstitial balls **1102** or **1102'.**

In short, as the interstitial balls are made smaller, they can be situated lower with respect to the tops of the main bichromal balls, and so can be made to absorb less light with their black hemispheres. However, as the interstitial balls are made smaller, they fill a smaller part of the interstitial gaps between the main bichromal balls, and so allow more light to pass beyond one hemisphere's depth in the main layer, thereafter to be lost to absorption.

FIG. 12 provides a more detailed side view of a gyricon display **1200** of the invention in a specific embodiment with main and interstitial bichromal balls. In display **1200,** main bichromal balls **1201** are placed as close to one another as possible in a monolayer in elastomer substrate **1202.** Substrate **1202** is swelled by a dielectric fluid (not shown) creating cavities **1203** in which the balls **1201** are free to rotate. The cavities **1203** are made as small as possible with respect to balls **1201,** so that the balls nearly fill the cavities. Also, cavities **1203** are placed as close to one another as possible, so that the cavity walls are as thin as possible. Preferably, balls **1201** are of uniform diameter and situated at a uniform distance from upper surface **1205.**

The arrangement of balls **1201** and cavities **1203** in display **1200** is comparable to that of balls **601** and cavities **603** in display **600** shown in FIG. 6. However, display **1200** differs from display 600 by the addition of small interstitial balls **1215,** which rotate in their own cavities **1216** created by swelling of elastomer substrate **1202** in the presence of the dielectric fluid. Balls **1215** rotate together with balls **1201** upon application of an electric field, so that when the white hemispheres of balls **1201** are presented to an observer at **I,** the white hemispheres of balls **1215** are also presented, and similarly for the black hemispheres.

Preferably balls **1215** are of uniform diameter and are situated at a uniform distance from upper surface **1205,** with the plane $P_2$ containing the centers of balls **1215** being closer to surface **1205** than the plane $P_1$ containing the centers of balls **1201.** The distance $z$ between the plane $P_2$ containing the centers of balls **1215** and the plane $P_1$ containing the centers of balls **1201** is preferably minimized, so that balls **1215** are as close to balls **1201** as possible, thus minimizing absorptive losses due to light scattering from the white hemispheres of balls **1201** into the black hemispheres of balls **1215.** Cavities **1216** are made as small as possible with respect to balls **1215,** so that the balls nearly fill the cavities, and the walls of cavities **1216** are made as thin as possible.

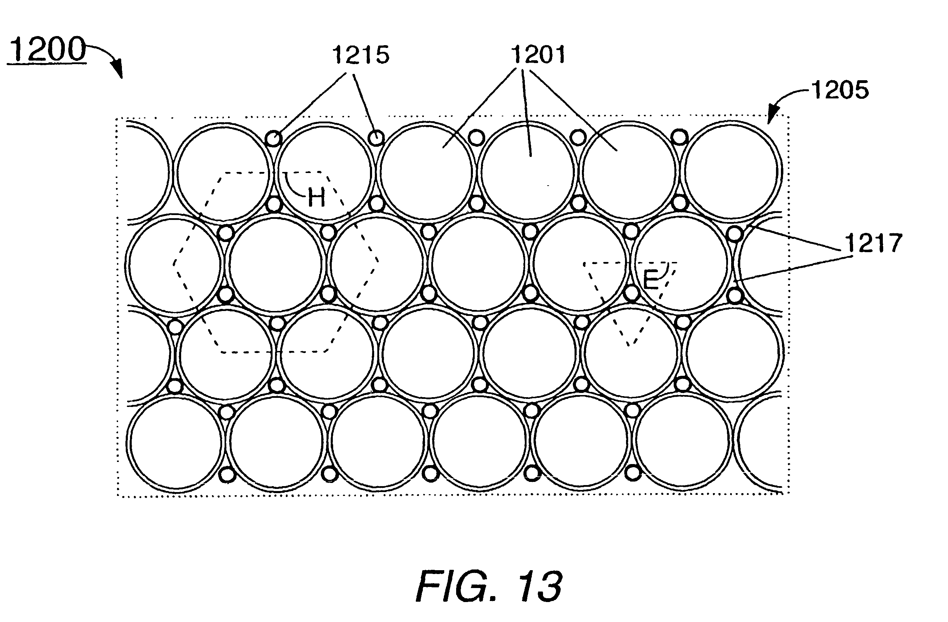

FIG. 13 shows a top view of a portion of display **1200.** The white hemispheres of main bichromal balls **1201** and interstitial bichromal balls **1215** can be seen through transparent surface **1205.** Preferably, a hexagonal packing geometry is used for balls **1201,** as indicated by hexagon **H** and equilateral triangle **E.** Interstitial balls **1215** fill the interstices **1217** left between balls **1201** in the hexagonal packing geometry. As previously discussed in connection with FIG. 11, balls **1215** can fill a greater or lesser portion of the interstices **1217,** depending on the relative diameters of balls **1201** and balls **1215.**

It will be apparent from FIGS. 11-13, when considered together with the earlier figures (esp. FIGS. 8-10), that many alternative embodiments are possible for interstitial packing of two populations of bichromal balls in a gyricon display according to the invention. In particular, the main bichromal balls can be packed in rectangular or rhomboidal geometries, and can be either a monolayer of balls or the close-packed top layer of a thick arrangement of balls. In all these embodiments, the basic idea is to intercept incoming light that would otherwise be lost in the interstices and reflect it to the observer, either directly or by scattering from nearby white hemispheres of larger balls, while preferably minimizing absorptive losses due to the black hemispheres of the smaller balls.

### *Electrical Advantages of Monolayer Construction*

A monolayer gyricon display according to the invention has advantages in addition to improved reflectance. The operating voltage needed for such a display is less than the voltage needed for a conventional thick gyricon display. This is because the rotation of gyricon balls under the influence of an electric field depends on the field strength. Electric field is the derivative of voltage with respect to distance (for example, in the simple case of a parallel plate capacitor, $E = V/d$). Thus a given electric field strength can be achieved with a lower applied voltage, other things being equal, by reducing the distance over which the voltage is applied. Accordingly, by using the thinnest configuration possible, which is a monolayer, the operating voltage of the gyricon display is minimized. A lower operating voltage has many advantages, including lower power consumption, less expensive drive electronics, and increased user safety.

The addition of interstial balls to the display need not result in increased operating voltage over what is required for the monolayer display. (For example, the drive voltage for interstitially packed display **1200** of FIG. 12 can be the same or comparable to the voltage used to drive monolayer display 600 of FIG. 6.) Commonly, the minimum electric field strength that must be applied to cause rotation of the smaller balls is no greater than the minimum field strength for the larger balls. Therefore, so long as the addition of the smaller balls to the display does not increase the overall substrate thickness, the voltage need not be increased. For example, the interstitial arrangements shown in views **(c)** and **(e)** of FIG. 11 can be situated in substrates no thicker than the substrate needed for a simple monolayer of balls **1101.** If the addition of the smaller balls does increase thickness over the monolayer thickness, as for the interstitial arrangement shown in view **(a)** of FIG. 11, a corresponding increase in voltage is required.

Another advantage of the monolayer display is improved resolution. As the display is made thinner, fringing field effects are minimized, as illustrated in FIG. 14. In each of the series of views of FIG. 14, addressing electrodes **1410** and **1411** are used to address adjacent pixels in a bichromal gyricon display. Electrode **1410** is held at a positive voltage *V+* and electrode **1411** is held at a negative voltage *V-* with respect to a ground plane **1420.** Because the applied voltages are of opposite signs, the pixels addressed by electrodes **1410** and **1411** are of opposite colors. For example, if the pixel addressed by electrode **1410** appears white, then the pixel addressed by electrode **1411** appears black. The bichromal balls are located in the space between addressing electrodes **1410, 1411** and ground plane **1420** {for clarity, only an exemplary few are shown in FIG. 14.)

In view **(a),** the distance *h* between electrodes **1410, 1411** and ground plane **1420** is relatively large. This provides a relatively large volume in which fringing fields **F** can develop. These are fields whose field lines curve directly from electrode **1410** to electrode **1411** instead of running to ground plane **1420.** Bichromal balls **1401** and **1402** align in the preferred manner, with the white hemisphere of ball **1401** facing squarely towards electrode **1410** and the black hemisphere of ball **1402** facing squarely towards electrode **1411.** However, bichromal balls **1403** and **1404** are caught in the path of fringing fields **F.** These balls turn at an angle to electrodes **1410** and **1411.** The result is that in the region of the fringing fields **F,** the display appears gray instead of black or white. The width *w* of the fringing fields (and thus of the gray region) in view **(a)** is comparable to the distance *h* between the electrodes **1410, 1411** and ground plane **1420.**

In view **(b),** the distance *h'* between electrodes **1410, 1411** and ground plane **1420** is relatively small, as for a monolayer display of the invention. This provides a relatively small volume for fringing fields **F'** to develop. Bichromal balls **1401** and **1402** align in the preferred manner, with the white hemisphere of ball **1401** facing squarely towards electrode **1410** and the black hemisphere of ball **1402** facing squarely towards electrode **1411.** The volume of fringing fields **F'** is sufficiently small that very few balls are caught in the path of these fields. The result is a sharp demarcation between the black and white pixels, with very little of the gray intermediate region that was present in view **(a).** The width *w'* of the fringing fields (and thus of the gray region) in view **(b)** is comparable to the separation distance △ between electrodes **1410** and **1411.**

### *Fabrication of the Inventive Gyricon Display*

The close-packed monolayer gyricon display can be fabricated by creating a monolayer of balls according to known techniques, such as that disclosed in "A Simple Method for the Production of a Two-Dimensional, Ordered Array of Small Latex Particles" by R. Micheletto, H. Fukuda, and M. Ohtsu, *Langmuir,* vol. 11, no. 9, 1995, pp. 3333-3336; preparing an elastomer sheet to contain the balls; and swelling the elastomer by application of a dielectric fluid.

Preparation of the elastomer can be carried out as for the fabrication of a conventional gyricon display, except for the way in which the elastomer is cured. With standard curing procedures, the elastomer swells over 50 percent upon application of the dielectric fluid, and the cavities in which the balls rotate are correspondingly large. Preferably, however, to achieve a close-packed layer according to the invention, the cavities should be made considerably smaller. This can be accomplished, for example, by using Dow-Corning SYLGARD 184 elastomer and curing it with a 15-percent curing agent (hardener) at 90 degrees Celsius. Upon application of ISOPAR L dielectric fluid, commonly used for known gyricon displays, the elastomer expands about 20 percent. To further control expansion, alternative dielectric fluids can be used in place of ISOPAR L. For example, for the above elastomer (15 percent cure at 90° C), a dielectric fluid mixture of 50 percent ISOPAR L and 50 percent soybean oil yields about 10 percent expansion.

To fabricate a gyricon display having smaller balls that fill the interstices in a close-packed monolayer of larger balls, the following technique can be used: A monolayer of the larger (main) bichromal balls is prepared as described above. This monolayer is placed on a layer of sticky, partially cured elastomer. The sticky elastomer layer is of a depth such that its top surface is coplanar with, or slightly below, the plane in which the centers of the smaller (interstitial) balls are to lie. For example, if the display structure is as shown in view (e) of FIG. 11, the sticky elastomer layer will rise to a depth about half-way up the larger balls. If the display structure is as shown in view (a) of FIG. 11, the sticky layer will reach the tops of the larger balls, or just below them. Once the monolayer is in place on the sticky elastomer, the smaller (interstitial) balls are dispersed over the monolayer. The smaller balls stick to the elastomer exposed by the interstitial gaps between the larger balls. Because of the depth of the elastomer, there can be at most one small ball per gap. Preferably, all the gaps are filled by small balls. This can be accomplished by dispersing more smaller balls than are needed to fill the gaps, and allowing excess smaller balls to pile on top of the balls stuck in the gaps. The sticky elastomer is not deep enough to reach the excess piled-up balls, so the excess balls can be shaken off, leaving only the stuck interstitial balls. Additional elastomer can then be added, preferably while the sticky layer is still sticky (that is, prior to full curing), as by pouring uncured liquid elastomer over the entire assemblage to sufficient depth as to cover the tops of the main and interstitial balls. In this way, the elastomer substrate can be built up to a desired thickness.

### *Further Details of the Light Rectifier Model*

Gyricon displays contain a large number of small particles. According to conventional wisdom, in the white state, these particles should diffusely reflect incoming light back out of the display. This desired result is similar to the reflection process in ordinary white paper and in other optical systems, such as white paint, white clouds, or milk. In other words, it is conventionally supposed that standard reflection theories, such as Kubelka-Munk theory, should apply to gyricon displays.

Accordingly, prior to the present invention, attempts to increase the reflectance of gyricon displays used techniques based on paper and other conventional diffuse reflection systems. In a sheet of paper, for example, incoming light is scattered by the small particles of fibers. Some of the light is initially reflected backward (i.e., toward the observer), but most goes forward or to the sides. The light that is not initially reflected will be scattered again by other particles, and will eventually reach either the top or bottom surface. To make the sheet perfectly white, all the light should eventually return to the top surface. Conventionally, this is achieved either by increasing the thickness of the paper or by increasing the density of scattering particles in the paper, for example, by loading with titanium dioxide.

The techniques of increasing the thickness and increasing the particle density have been tried in gyricon displays of the prior art. The results were disappointing. In particular, it was not possible to increase the brightness of the white areas of the gyricon display to the levels required for a paper surrogate.

In the research leading to the present invention, various factors that could conceivably contribute to the less-than-expected reflectance of gyricon displays were investigated, both theoretically (including computer modeling) and experimentally. It was found that a particularly significant factor is the absorptive effect of the black hemispheres of the bichromal balls: Light that passes through the interstices in the top layer of balls and is reflected from lower layers was found to be largely absorbed by the black undersurfaces of the top layer of balls. A similar effect was found to obtain for all layers in the gyricon display: In any given layer, the black undersurfaces of the bichromal balls absorb the light reflected from any lower layers.

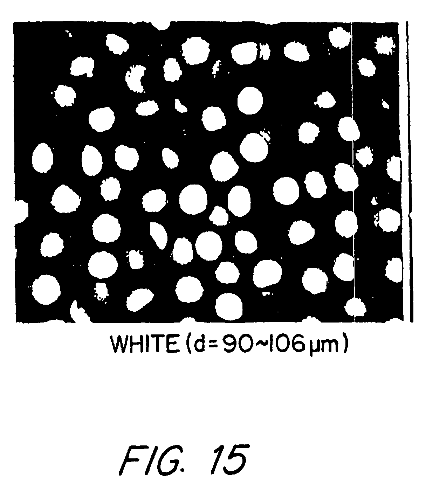

A photomicrograph of a thick gyricon display, taken during the course of the research, is shown in FIG. 15. As can be seen, only the balls located close to the top surface of the gyricon display appear to be white. Balls located some distance from the surface appear increasingly dark as the depth increases. (This contrasts with what is observed in conventional diffuse scattering systems, such as paper or milk. In those systems, the particles below the surface still appear white.) Adding more balls to make a thicker gyricon display does not significantly increase reflectance, because the additional balls are located farther from the viewing surface and so appear dark, looking gray rather than white.

The research showed that in a typical conventional gyricon display, bichromal balls are dispersed throughout the thickness of the substrate sheet, which is always thicker than two ball diameters and is usually many diameters thick. Generally, less than 20 percent of the upper surface area of the sheet is covered by the bichromal balls in the layer closest to the surface. This corresponds to a spacing between ball centers on the order of twice the diameter of the balls. In other words, the gaps between adjacent bichromal balls of the topmost layer are quite large, and fewer than 20 percent of the balls are situated where they can contribute effectively to display reflectance.

To provide a more accurate description of light behavior in gyricon displays, the light rectifier model was developed. This model, described above with reference to FIGS. 3 and 4, produces the following reflectance equation (1):

$$R = K\alpha \qquad \text{(Eq. 1)}$$

Here, R is the reflectance—more specifically, the diffuse reflectance—of the gyricon display, as measured by an integrating sphere technique. Integrating sphere measurement techniques are well known and are described, for example, in chapter 10 of *Reflectance Spectroscopy* by Wesley Wm. Wendlandt and Harry G. Hecht (Interscience Publishers, 1966); diffuse reflectance (as distinct from, for example, specular or total reflectance) is defined in chapter 3 of the same reference. The diffuse reflectance of high-quality white paper is typically 85 percent and that of newsprint is typically 60 percent. The inventive gyricon displays can be expected to provide greatly improved diffuse reflectance, e.g., 30 percent, 40 percent, 60 percent, or even 80 or 85 percent, as opposed to gyricon displays of the prior art, for which the diffuse reflectance is at most 15 to 20 percent.

Further in equation (1), the *areal coverage fraction* $\alpha$ is defined as the ratio of the projected area of the white faces of the topmost bichromal balls of the gyricon display to the total area of the gyricon display viewing surface when all bichromal balls are turned with their white faces towards the viewing surface. In general, $\alpha$ depends on geometry and can be computed either globally for an entire gyricon display or locally for any region thereof.

Still further in equation (1), *K* is a parameter, treated here as a constant, that accounts for all sources of light loss other than the absorptive losses predicted by the light rectifier model. Such other sources of light loss can include, for example, stray black spots or streaks in the white ball hemispheres, ball surface roughness or other surface defects, balls that fail to rotate completely, mismatches between the refractive indices of the elastomer or other substrate and the working fluid in which the balls rotate, etc. Equation (1) assumes that all these other sources of light loss can be treated as independent of light rectifier losses; this assumption is valid at least as a first-order approximation.

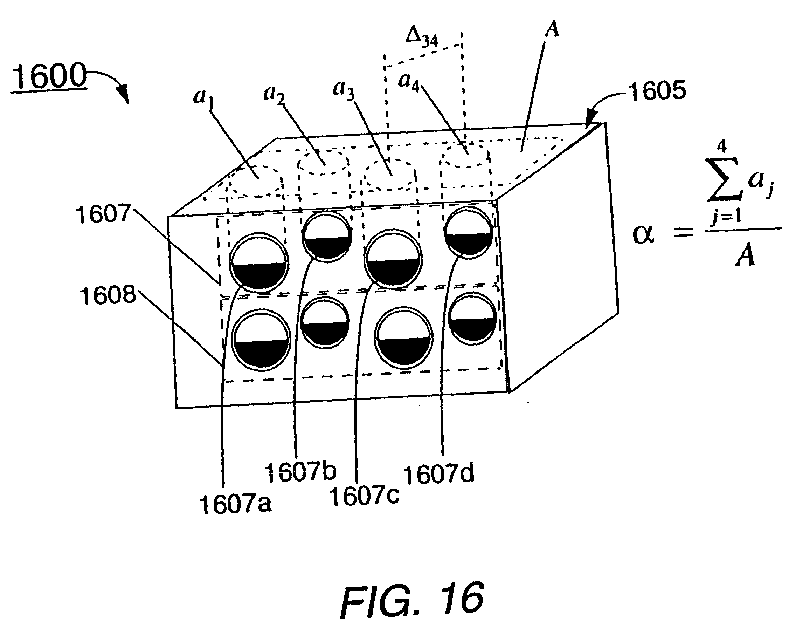

An exemplary computation of $\alpha$ is illustrated schematically in FIG. 16. A selected portion of gyricon display **1600** is shown. Bichromal balls of the display are turned with their white hemispheres towards viewing surface **1605.** Topmost bichromal balls **1607** are those located closest to surface **1605;** no other bichromal balls are situated between balls **1607** and surface **1605** where they could potentially absorb light reflected by balls **1607.** Bichromal balls **1608** are farther below surface **1605,** so that topmost bichromal balls **1607** are between bichromal balls **1608** and surface **1605;** thus the black hemispheres of topmost bichromal balls **1607** absorb most of the light reflected from bichromal balls **1608.** Accordingly, only the projected areas ($a_1$, $a_2$, $a_3$, $a_4$) of the white hemispheres of topmost bichromal balls **1607** are counted toward the areal coverage fraction $\alpha$, because balls **1607** are the only ones that contribute significantly to the brightness of display **1601.**

Continuing in FIG. 16, $\alpha$ is computed by dividing the sum of the projected areas ($a_1$, $a_2$, $a_3$, $a_4$) by $A$, which is the area of surface **1605** for the selected portion of the display. More particularly, suppose that bichromal balls **1607a, 1607b, 1607c, 1607d** have respective diameters $\delta_1$, $\delta_2$, $\delta_3$, $\delta_4$, so that their combined projected areas are $a_1 + a_2 + a_3 + a_4 = \pi(\delta_1^2 + \delta_2^2 + \delta_3^2 + \delta_4^2)/4$. Also suppose that balls **1607c** and **1607d** are separated by a distance whose projection in the plane of surface **1605** is $\Delta_{34}$ and that the separation between balls **1607a** and **1607b,** and that between balls **1607b** and **1607c,** is also $\Delta_{34}$. Then the area $A$ is approximately twice the area of a square of width $2\Delta_{34}$, that is, approximately $8\Delta_{34}^2$. Therefore, $\alpha$ is computed to be the ratio $\pi(\delta_1^2 + \delta_2^2 + \delta_3^2 + \delta_4^2)/8\Delta_{34}^2$. Note that the other bichromal balls **1608** do not contribute to the projected areas **1610,** and thus do not figure in the calculation of $\alpha$.

$\alpha$ depends on the size of the white hemisphere of each individual ball among the topmost bichromal balls and on the amount of empty space present between the topmost bichromal balls. Thus, in general, the expression for $\alpha$ can be quite complicated. For example, if there are $n$ topmost bichromal balls, and if the $i$th ball has diameter $\delta_i$ and the spacing between the $i$th and $j$th balls is $\Delta_{ij}$, then $\alpha$ is a function of all $\delta_i$ and $\Delta_{ij}$, that is, $\alpha = \alpha(\delta_i, \Delta_{ij})_{i=1,n; j=1,n}$ and $R = K\alpha(\delta_i, \Delta_{ij})_{i=1,n, j=1,n}$. Even this expression for $R$ has certain built-in simplifying assumptions, e.g., that all topmost balls are perfectly spherical, so that the diameters $\delta_i$ are all well-defined, and that all topmost balls are located at the same distance from the surface of the gyricon display, so that $\Delta_{ij}$ need not be corrected to account for variations in ball depth (relaxation of the latter assumption leads to the formula $R = K\alpha(\delta_i, \Delta_{ij} \cos \theta_{ij})_{i=1,n: j=1,n}$, where $\theta_{ij}$ is the angle formed between the surface and a line connecting balls $i$ and $j$).

If it is assumed that there are only minor variations in ball size and spacing, and that the topmost balls are in a planar layer at a fixed distance from the viewing surface, average values $\delta$ and $\Delta$ can be substituted for the individual values $\delta_i$ and $\Delta_{ij}$. Then $\alpha$ can be expressed as a function of the average size of the bichromal balls in the display and of the average spacing between the centers of the bichromal balls, which yields the following equation (2):

$$R = K\alpha(\delta, \Delta) \qquad \text{(Eq. 2)}$$

Here, $\delta$ is a measure of the average size of the bichromal balls. For example, $\delta$ can be the maximum or mean diameter or radius of a spheroidal ball. $\Delta$ is a measure of the average distance between ball centers, projected in the plane of the viewing surface.

For perfectly spherical balls of constant diameter $d$ in a uniformly spaced monolayer array with characteristic spacing $D$, equation (2) reduces to the following equation (3):

$$R = K \frac{\alpha_0}{1 + x^2} \qquad \text{(Eq. 3)}$$

Here, $x$ is the ratio $(D-d)/d$, where $d$ is the diameter of each bichromal ball and $D$ is the characteristic center-to-center spacing between adjacent balls. Note that if the cavities in which the balls rotate are of constant diameter and are close-packed so that the walls of adjacent cavities touch one another, $D$ is equal to the diameter of the cavities.

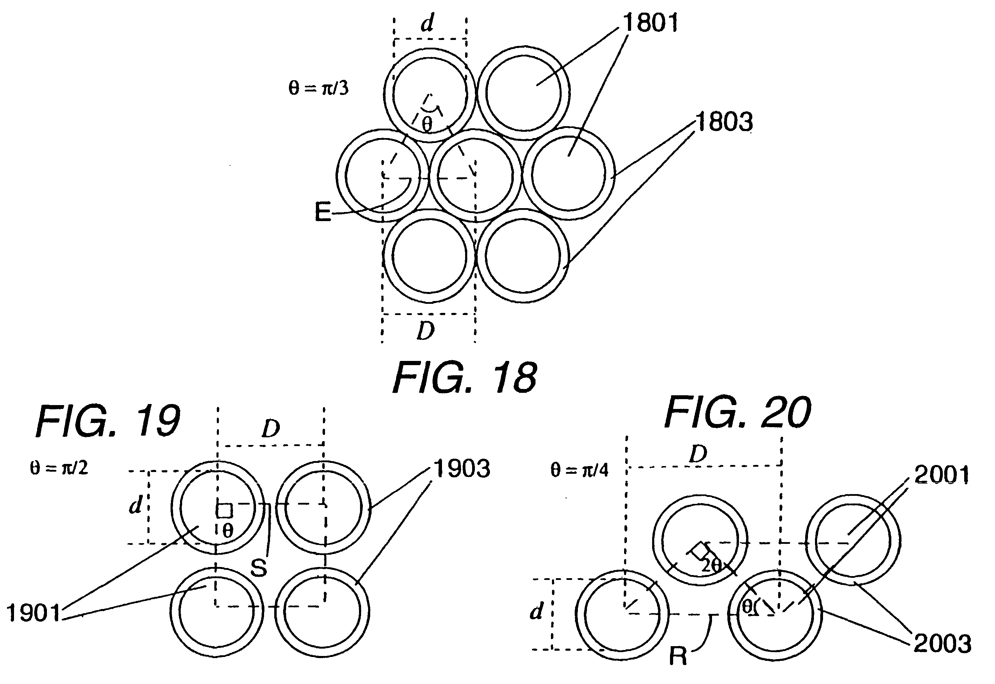

Further in equation (3), $\alpha_0$ is the maximum theoretically possible areal coverage fraction for the particular packing geometry of the array; that is, $\alpha_0$ is the areal coverage fraction obtained for a monolayer of spherical balls arranged in an ideal close-packed lattice of the selected geometry with surfaces of adjacent balls touching one another. $\alpha_0$ can be computed geometrically as described below with reference to FIGS. 18-20. For a hexagonal packing geometry, which is the packing geometry that most effectively covers the plane, it can be shown that $\alpha_0$ is $\pi$ divided by twice the square root of 3, that is, $\pi/(2 \cdot 3^{1/2})$ or approximately 0.907; put another way, a planar close-packed hexagonal array of spheres covers approximately 0.907 times the total area of the plane. Therefore, for an ideal close-packed hexagonal monolayer array of bichromal balls and a planar viewing surface, the projected area of the ball hemispheres facing the viewing surface covers just under 91 percent of the total area of the viewing surface.

FIG. 17 illustrates the relationships among the quantities $D$ and $d$ of equation (3). Each of the series of views of FIG. 17 shows a portion of a gyricon display that includes bichromal balls 1701 situated in cavities 1703 beneath viewing surface 1705. The diameter of balls 1701 is $d$ and the diameter of cavities 1703 is $C$. In view **(a),** $D$, the center-to-center spacing between balls 1701 is greater than $C$, and cavities 1703 are separated from one another by a distance of $(D - C)$. In view **(b),** $D'$, the center-to-center spacing between balls 1701 is equal to $C$. Cavities 1703 touch one another as shown.

FIG. 17 elucidates an important interpretation of equation (3). For an elastomer substrate in which the cavities touch, as in view **(b)** of FIG. 17, $D = C$ and $x = (C-d)/d$, so that $x + 1 = C/d$, which is the ratio between cavity diameter and ball diameter. Thus in this case, $x$ can be interpreted as the *expansion fraction,* which is the fractional increase in elastomer size (linear dimension) that takes place when dielectric fluid is applied to expand the elastomer. Accordingly, when the conditions illustrated in view (b) of FIG. 17 obtain, equation (3) can be used to estimate how display reflectance (and thus display brightness) varies with varying degrees of elastomer expansion.

According to equation (3), the display reflectance $R$ drops rapidly as the value $x = (D-d)/d$ increases. $x$ increases as the center-to-center distance $D$ increases, that is, as the packing density of the balls decreases. In particular, in the case where $D = C$ so that $x$ is the expansion fraction, $x$ increases as the degree of elastomer expansion increases. (Note that equation (3) assumes a uniform planar array of uniform-diameter bichromal balls; however, it will be appreciated that lattice defects, such as voids or dislocations in the array and nonuniform ball size, effectively increase $x$.)

Table 1 lists values of $R$ computed from equation (3) for various values of $x$ and $K$. A hexagonal packing geometry is assumed.

Table 1

| $x$ | $R$ (K = 1.0) | $R$ (K = .7) | $R$ (K = .5) |
|-------|---------------|--------------|--------------|
| 0.000 | 0.907 | 0.635 | 0.454 |
| 0.050 | 0.823 | 0.576 | 0.411 |
| 0.100 | 0.750 | 0.525 | 0.375 |
| 0.150 | 0.686 | 0.480 | 0.343 |
| 0.200 | 0.630 | 0.441 | 0.315 |
| 0.250 | 0.580 | 0.406 | 0.290 |
| 0.300 | 0.537 | 0.376 | 0.268 |
| 0.350 | 0.498 | 0.348 | 0.249 |
| 0.400 | 0.463 | 0.324 | 0.231 |
| 0.450 | 0.431 | 0.302 | 0.216 |
| 0.500 | 0.403 | 0.282 | 0.202 |
| 0.600 | 0.354 | 0.248 | 0.177 |
| 0.700 | 0.314 | 0.220 | 0.157 |
| 0.800 | 0.280 | 0.196 | 0.140 |
| 0.900 | 0.251 | 0.176 | 0.126 |
| 1.000 | 0.227 | 0.159 | 0.113 |

As can be seen from Table 1, the reflectance $R$ decreases rapidly as $x$ increases. For example, for $K = 1$ (that is, no losses other than light rectifier losses), with $x = .35$, over half the incident light is lost. For the more realistic value $K = .7$, which was determined experimentally during the research as an approximate value for some of the gyricon displays studied, even with $x = .15$, over half the incident light is lost, and with $x = .35$, nearly two-thirds of the incident light is lost. For a lower quality display having $K = .5$, with $x = .15$, almost two-thirds of the incident light is lost, and with $x = .35$, over three-fourths of the incident light is lost.

Reflectance $R$ is maximized when $x$ is minimized. By rewriting $x = (D-d)/d$ as $D/d = x + 1$, it can be seen that $x$ is minimized when $D/d$, the ratio between the center-to-center spacing $D$ and the ball diameter $d,$ is minimized. The smallest value possible for $D/d$ is obtained when $x = 0$, so that $D/d = 1$. This corresponds to an ideal close-packed layer according to the invention, in which the center-to-center spacing $D$ is equal to the ball diameter $d$ so that the ball surfaces touch one another.

To summarize briefly, the areal coverage fraction $\alpha$, and thus the reflectance $R$, is maximized for a gyricon display of the invention by packing the bichromal balls of the monolayer (or top layer) as close together as possible, that is, in a hexagonal close-packed planar array with the cavity diameter $C$ equal to the ball diameter d and the cavities touching so that $D = C$. In this ideal case, $x = 0$ and the projected area of the monolayer covers just under 91 percent of the viewing surface. Still greater areal coverage and reflectance can be achieved by situating smaller balls within the interstices of the hexagonal packing arrangement, as was described above with reference to FIGS. 11-13.

FIGS. 18-20 illustrate the computation of the areal coverage fraction $\alpha$ and maximum areal coverage fraction $\alpha_0$ for planar monolayers of uniform diameter spherical balls in various packing geometries. In FIG. 18, a hexagonal array of balls **1801** situated in cavities **1803** is shown in a top view. Balls **1801** have diameter $d$ and center-to-center spacing $D$ (equal to the cavity diameter, since cavities **1803** touch one another). The centers of neighboring balls form an equilateral triangle **E**. The areal coverage fraction is computed as the ratio between the area of that portion of the triangle **E** overlapped by projected areas of balls **1801** and the area of the entire triangle **E.** The projected area for each of balls **1801** is $\pi d^2/4$. Therefore, the area of the region of overlap for each ball in the vicinity of triangle **E** is $\theta \cdot d^2/8$ where $\theta$ is expressed in radians as $\theta = \pi/3$. Three balls are in the vicinity of triangle **E**. Triangle **E** has a base of length $D$. Thus $\alpha = 3(\pi d^2/24) \div (3^{1/2}/4)D^2 = \pi d^2/(2 \cdot 3^{1/2})D^2$. The maximum areal coverage fraction $\alpha_0$, achieved when $D = d$, is $\pi/(2 \cdot 3^{1/2})$ or approximately 0.907.

In FIG. 19, a rectangular array of balls **1901** situated in cavities **1903** is shown in a top view. Balls **1901** have diameter $d$ and center-to-center spacing $D.$ The centers of neighboring balls form a square **S.** The areal coverage fraction is computed as the ratio between the area of that portion of the square **S** overlapped by projected areas of balls **1901** and the area of the entire square **S.** The projected area for each of balls **1901** is $\pi d^2/4$. The area of the region of overlap for each ball in the vicinity of square **S** is $\theta \cdot d^2/8$ where $\theta$ is expressed in radians as $\theta = \pi/2$. Four balls are in the vicinity of square **S.** Square **S** has a base of length $D.$ Thus

$\alpha = 4(\pi d^2/16) \div D^2 = \pi d^2/4D^2$. The maximum areal coverage fraction $\alpha_0$, achieved when $D = d$, is $\pi/4$, or approximately 0.785.

In FIG. 20, a rhomboidal array of balls **2001** situated in cavities **2003** is shown in a top view. Balls **2001** have diameter $d$ and center-to-center spacing $D$. The centers of neighboring balls form a rhombus **R.** The areal coverage fraction is computed as the ratio between the area of that portion of the rhombus **R** overlapped by projected areas of balls **1901** and the area of the entire rhombus **R.** Going through the calculations once again, the results are $\alpha = \pi d^2/4D^2$ and $\alpha_0 = \pi/4$, the same results as for the rectangular packing geometry.

### *Monolayer Gyricon Display with No Cavities*

In a gyricon display made with swelled elastomer, each bichromal ball is situated in a cavity. As discussed above, to achieve the closest possible packing of bichromal balls in such a display, the cavities are preferably made as small and as close together as possible.

To achieve still higher packing density, a gyricon display can be constructed without elastomer and without cavities. In such a display, the bichromal balls are placed directly in the dielectric fluid. The balls and the dielectric fluid are then sandwiched between two retaining members (e.g., between the addressing electrodes). There is no elastomer substrate.

FIG. 21 illustrates a side view of a no-cavities gyricon display. In display **2100,** a monolayer of bichromal balls **2101** of uniform diameter is situated in dielectric fluid **2109** between matrix-addressable electrodes **2104a, 2104b.** Preferably balls **2101** are arranged in a hexagonal array within the monolayer, packed as close together as is possible consistent with proper ball rotation. Balls **2101** are electrically dipolar in the presence of dielectric fluid **2109** and so are subject to rotation upon application of an electric field, as by electrodes **2104a, 2104b.** The electrode **2104a** closest to upper surface **2105** is preferably transparent. An observer at **I** sees an image formed by the black and white pattern of the balls **2101** as rotated to expose their black or white hemispheres to the upper surface **2105** of display **2100.**

Electrodes **2104a, 2104b** serve both to address balls **2101** and to retain balls **2101** and fluid **2109** in place. Preferably the spacing between electrodes **2104a, 2104b** is as close to the diameter of balls **2101** as is possible consistent with proper ball rotation. Balls **2101** and fluid **2109** can be sealed in display **2100,** for example by seals at either end of the display (not shown).

The packing density of the bichromal balls **2101** in display **2100** can closely approach the ideal case wherein $x = 0$ in equation (3). Thus display **2100** provides maximum reflectance and maximum brightness.

The close packing of balls **2101** in the monolayer, together with the close spacing of the electrodes **2104a, 2104b,** ensures that balls **2101** do not settle, migrate, or otherwise escape from their respective positions in the monolayer. Interstitial balls (not shown) can also be included in display **2100,** for example by using the arrangement and interstitial ball diameter shown in views **(c)** and **(d)** of FIG. 11. The smaller balls are retained in place from above by upper electrode **2104a** and from below by the larger balls **2101.**

### *Conclusion*

Gyricon displays have unique optical properties. Conventional approaches used to increase the reflectance of diffuse scattering arrays do not work well for gyricon displays. Conventional optical models, which assume that the bichromal balls situated well below the viewing surface of a gyricon display contribute as much to overall display brightness as do the bichromal balls nearest the viewing surface, do not accurately describe gyricon display optics. The light rectifier model provides a better description.

The invention provides a new gyricon display based on a close-packed monolayer of bichromal balls. The design of the new display takes the light rectifier model into account, in that the light reflected from the display is reflected almost entirely from the upper hemispheres of balls in the close-packed monolayer. The inventive display provides superior reflectance and brightness characteristics as compared with conventional gyricon displays, and accordingly it provides superior contrast characteristics as well. Moreover, because of the monolayer construction, the new display requires lower voltage than conventional gyricon displays, and can provide superior resolution inasmuch as electric field fringing effects are minimized. It is hoped that the new gyricon display of the invention will go a long way toward making the promise of electric paper come true.

The foregoing specific embodiments represent just some of the possibilities for practicing the present invention. Many other embodiments are possible within the spirit of the invention. For example:

- The electrical anisotropy of a gyricon ball need not be based on zeta potential. It is sufficient that there is an electrical dipole moment associated with the ball, the dipole moment being aligned with respect to the ball in such a way as to facilitate a useful rotation of the ball in the presence of an applied external electric field. (Typically, the dipole moment is oriented along an axis of symmetry of the ball.) Further, it should be noted that a gyricon ball can have an electrical monopole moment in addition to its electrical dipole moment, as for example when the dipole moment arises from a separation of two positive charges of different magnitudes, the resulting charge distribution being equivalent to a positive electrical monopole superposed with a electrical dipole.

- The optical anisotropy of a gyricon ball need not be based on black and white. For example, bichromal balls having hemispheres of two different colors, e. g. red and blue, can be used. As another example, balls that are black in one hemisphere and mirrored in the other might be used for some applications. In general, various optical properties can vary as different aspects of a gyricon ball are presented to an observer, including (but not limited to) light scattering and light reflection in one or more regions of the spectrum. Thus the gyricon balls can be used to modulate light in a wide variety of ways.

- The incident light that encounters a gyricon display need not be restricted to visible light. Given suitable materials for the gyricon balls, the incident "light" can be, for example, infrared light or ultraviolet light, and such light can be modulated by the gyricon display.

- On several occasions the foregoing description refers to a planar monolayer of bichromal balls. However, persons of skill in the art will appreciate that a gyricon display (or a sheet of bichromal balls for use in such a display) made of a flexible material can be temporarily or permanently deformed (for example, flexed, folded, or rolled) so as not to be strictly planar overall. In such cases, the plane of a monolayer can be defined, for example, in a locally planar neighborhood that includes the gyricon ball or balls of interest. Also, it will further be appreciated that in practice the monolayer can vary somewhat from what has been described, for example, due to manufacturing tolerances or slight imperfections of particular gyricon sheets.

- The inventive display can also be built using cylindrical elements in place of the usual spherical elements (e.g., bichromal cylinders instead of bichromal balls), as disclosed in copending, coassigned application WO 97/50071, entitled "Twisting-Cylinder Display".

**Claims**

1. A material comprising:

    an optically transmissive substrate (602); and a plurality of optically anisotropic particles (601) disposed substantially in a monolayer in the substrate (602), the particles being closely packed with respect to one another in the monolayer, a rotatable disposition of each particle (601) being achievable while said particle (601) is thus disposed in the substrate, said particle (601), when in said rotatable disposition, not being attached to the substrate (602).

2. A material as claimed in claim 1,

    the plurality of particles including first (201) and second (1215) populations of particles;

    the particles of the first population (1201) as considered by themselves without the particles of the second population (1215) being disposed in the substrate (1202) in a closely packed arrangement having interstices (907);

    the particles of the second population (1215) being disposed in the interstices (907) of the arrangement of the first population (1201) of particles.

3. A material as claimed in claim 1,

    the plurality of particles including first (1201) and second populations (1215) of particles,

    the particles of the first population (1201) as considered by themselves without the particles of the second population (1215) being disposed in the substrate (1202) in an arrangement comprising substantially a single layer of particles (P1), the layer being formed of those particles situated closest to the substrate surface among all the particles of the first population (1201),

    each particle in the layer (1201) having a centre point, substantially no particle in the layer (1201) being disposed entirely behind the centre point of any nearest neighbouring particle in the layer (1201) with respect to the substrate surface (1705),

    each particle in the layer (1201) having a projected area (d) with respect to the substrate surface (1705), the particles of the layer (1201) being sufficiently closely packed with respect to one another in the layer that the union of their projected areas (d) exceeds two-thirds of the area of the substrate surface (1705),

    the particles of the second population (1215) being situated amidst the particles of the first population (1201) such that light incident on a portion of the substrate and transmitted therethrough towards the particles of the plurality in a vicinity of said portion illuminates and is modulated by particles of both populations in said vicinity, the particles of the second population in said vicinity thus modulating light that would otherwise, but for the presence of the particles of the second population (1215), pass through the layer by passing between particles of the first population (1201).

4. A material as claimed in claim 2 or 3 wherein:

    the particles of the first population (1201) are of a substantially uniform first size **characterized by** a first linear dimension;
    the particles of the second population (1215) are of a substantially uniform second size **characterized by** a second linear dimension less than the first linear dimension; and
    the particles of the first (1201) and second (1215) populations have similar optical anisotropies.

5. A material as claimed in any one of claims 1 to 4 wherein:

   the substrate (602) includes a viewing surface (605), the particles of the monolayer (601) being disposed behind the viewing surface (605) with respect to an observer (1) situated favourably to observe the viewing surface (605), the particles (601) thus being observable by the observer (1) through the viewing surface (605), each particle (601) having an anisotropy for providing an electrical dipole moment, the electrical dipole moment rendering the particle electrically responsive such that when the particle is rotatably disposed in an electric field while the electrical dipole moment of the particle is provided, the particle tends to rotate to an orientation in which the electrical dipole moment aligns with the field;
   means for keeping in place with respect to the viewing surface the particles thus disposed; and
   means for facilitating a rotation of at least one of the particles thus disposed by selectively applying an electric field to a particle for which the electrical dipole moment is provided.

6. A material as claimed in any one of claims 1 to 5,
   each particle (601) comprising first and second component regions associated with, respectively, first and second optical modulation characteristics, the first component region having a first region surface, the second component region having a second region surface, the first and second region surfaces being disposed relative to one another such that the particle (601), when rotatably disposed in the substrate, can be rotated to an orientation in which the first region surface is relatively proximate to the viewing surface (605) and the second region surface is relatively distal to the viewing surface (605),
   **characterised by** the monolayer being substantially parallel to the viewing surface (605) of a portion of the substrate, the monolayer having an areal extent, the areal extent being coextensive with at least said portion of the substrate,
   the particles (601) of the layer being disposed in the layer in a manner such that over substantially all of the areal extent of the layer, a line segment constructed perpendicular to the viewing surface (605) from any given point on the viewing surface (605) and extending towards the layer and further extending through the layer intersects at most one particle (601) of the layer before exiting the layer,
   each particle (601) of the layer having a projected area (d) with respect to the viewing surface (605), the projected area (d) being that area of the viewing surface (605) covered by a projection of said particle's first region surface onto the viewing surface (605) when said particle (601) is rotationally orientated such that said particle's first region surface is maximally proximate to the viewing surface,
   the particles (601) of the layer being situated sufficiently close to one another in the layer such that the sum of the projected areas (d) of the particles of the layer exceeds two-thirds of the area of the surface (605) of said portion of the substrate (602) throughout which the layer really extends.

7. A material as claimed in any one of claims 1 to 6,
   the plurality of particles (601) including a set of particles situated closest to the substrate surface (605), the particles of the set forming substantially a single layer,
   each particle (601) in the layer having a centre point, substantially no particle (601) in the layer being disposed entirely behind the centre point of any nearest neighbouring particle (601) in the layer with respect to the substrate surface (605),
   each particle (605) in the layer having a projected area (d) with respect to the substrate surface (605), the particles (601) of the set being sufficiently closely packed with respect to one another in the layer that the union of their projected areas exceeds two-thirds of the area of the substrate surface (605).

8. A material as claimed in any one of claims 1 to 7, wherein the optically transmisive substrate (602) has an optically transmissive surface for light entry into the material and an optically transmissive surface for light exit from the material, the optically transmissive surfaces optionally being one and the same surface; and
   a plurality of optical modulating elements (602) disposed in the substrate, each element comprising an optically anisotropic particle (601) rotatable to present first and second optical modulation aspects towards the light entry surface, each particle (601) having a preferred rotational orientation with respect to the light entry surface,
   each particle (601) having an anisotropy for providing an electrical dipole moment, the electrical dipole moment rendering the particle (601) electrically responsive such that when the particle (601) is rotatably disposed in an electric field while the electrical dipole moment is provided, the particle (601) tends to rotate to an orientation in which the electrical dipole moment aligns with the electric field,
   the modulating elements being situated with respect to the light entry surface and the light exit surface such that light can enter the apparatus via a portion of the light entry surface and be modulated by a set of the modulating elements in the apparatus and optionally at least some of the light thus modulated can exit from the apparatus via at least a portion of the light exit surface,

the modulating elements of the set modulating the light that illuminates them when the particles of the modulating elements of the set are in their preferred rotational orientations such that at least 15 percent of the light incident on said portion of the light entry surface ultimately exits through the light exit surface as measured by an integrating sphere technique.

9. A display apparatus including a material as claimed in any one of the preceding claims.


**Patentansprüche**

1. Material, das enthält:

ein optisch durchlässiges Substrat (602); und eine Vielzahl von optisch anisotropen Partikeln (601), die im Wesentlichen in einer einzigen Schicht in dem Substrat (602) angeordnet sind, wobei die Partikel in der einzigen Schicht dicht zueinander gepackt sind und eine drehbare Anordnung eines jeden Partikels (601) erreichbar ist, während das Partikel (601) so in dem Substrat angeordnet ist, und das Partikel (601) nicht an dem Substrat (602) festgemacht ist, wenn es in der drehbaren Anordnung ist.

2. Material nach Anspruch 1, wobei
die Vielzahl von Partikeln erste (1201) und zweite (1215) Populationen von Partikeln enthält;
die Partikel der ersten Population (1201), die für sich und ohne die Partikel der zweiten Population (1215) betrachtet werden, in dem Substrat (1202) in einer dicht gepackten Anordnung mit Lükken (907) verteilt sind; und
die Partikel der zweiten Population (1215) in den Lücken (907) der Anordnung der ersten Population (1201) von Partikeln verteilt sind.

3. Material nach Anspruch 1, wobei
die Vielzahl von Partikeln erste (1201) und zweite (1215) Populationen von Partikeln enthält;
die Partikel der ersten Population (1201), die für sich und ohne die Partikel der zweiten Population (1215) betrachtet werden, in dem Substrat (1202) in einer Anordnung verteilt sind, die im Wesentlichen eine einzige Schicht von Partikeln (P1) enthält, und die Schicht von den Partikeln gebildet wird, die am nächsten zu der Substratoberfläche unter allen Partikeln der ersten Population (1201) gebildet werden;
jedes Partikel in der Schicht (1201) einen Mittelpunkt hat, und im Wesentlichen kein Partikel in der Schicht (1201) vollständig hinter dem Mittelpunkt des nächstgelegenen Nachbarpartikels in der Schicht (1201) hinsichtlich der Oberfläche des Substrats (1705) angeordnet ist;
jedes Partikel in der Schicht (1201) einen projizierten Bereich (d) hinsichtlich der Oberfläche des Substrats (1705) hat, und die Partikel der Schicht (1201) hinreichend dicht gepackt sind hinsichtlich eines anderen in der Schicht, so dass die Vereinigung der projizierten Bereiche (d) zwei Drittel der Oberfläche des Substrats (1705) übersteigt; und
die Partikel der zweiten Population (1215) mitten zwischen den Partikeln der ersten Population (1201) liegen, so dass das auf einen Abschnitt des Substrats einfallende und durch ihn hindurch zu den Partikeln der Vielzahl in einer Umgebung des Abschnitts übertragene Licht die Partikel beider Populationen in der Umgebung beleuchtet und durch sie moduliert wird, wobei die Partikel der zweiten Population in der Umgebung somit Licht modulieren, das sonst außer bei Anwesenheit der Partikel der zweiten Generation (1215) durch die Schicht durch Vorbeigehen zwischen den Partikeln der ersten Population (1201) hindurchgehen würde.

4. Material nach Anspruch 2 oder 3, wobei
die Partikel der ersten Population (1201) von einer im Wesentlichen gleichförmigen, ersten Größe sind, die durch eine erste lineare Dimension **gekennzeichnet** ist;
die Partikel der zweiten Population (1215) von einer im Wesentlichen gleichförmigen, zweiten Größe sind, die durch eine zweite lineare Dimension kleiner als die erste lineare Dimension **gekennzeichnet** ist; und
die Partikel der ersten (1201) und zweiten (1215) Populationen ähnliche optische Anisotropien haben.

5. Material nach irgendeinem der Ansprüche 1 bis 4, wobei
das Substrat (602) eine Betrachtungsoberfläche (605) enthält, die Partikel der einzigen Schicht (601) hinter der Betrachtungsoberfläche (605) hinsichtlich eines Betrachters (1) liegen, welcher günstig positioniert ist, um die Betrachtungsoberfläche (605) zu betrachten, wodurch die Partikel (601) somit von dem Betrachter (1) durch die Betrachtungsoberfläche (605) hindurch betrachtet werden können,
jedes Partikel (601) eine Anisotropie hat für das Vorsehen eines elektrischen Dipolmoments, und das elektrische Dipolmoment das Partikel elektrisch reagierend macht, so dass dann, wenn das Partikel in einem elektrischen Feld drehbar angeordnet ist, während das elektrische Dipolmoment des Partikels vorgesehen ist, das Partikel dazu tendiert, sich zu einer Ausrichtung hin zu drehen, in der das elektrische Dipolmoment mit dem Feld übereinstimmt;

eine Einrichtung für das Halten der so angeordneten Partikel an der Stelle hinsichtlich der Betrachtungsoberfläche; und

eine Einrichtung für das Erleichtern einer Drehung von mindestens einem der so angeordneten Partikel durch selektives Anlegen eines elektrischen Felds an ein Partikel, für welches das elektrische Dipolmoment vorgesehen ist.

6. Material nach irgendeinem der Ansprüche 1 bis 5, wobei

jedes Partikel (601) erste und zweite Komponentenregionen enthält, die den ersten und zweiten optischen Modulationskennwerten zugeordnet sind, und die erste Komponentenregion eine erste Regionsoberfläche hat, die zweite Komponentenregion eine zweite Regionsoberfläche hat, die erste und zweite Regionsoberflächen relativ zueinander derart angeordnet sind, dass die Partikel (601) dann, wenn sie drehbar in dem Substrat angeordnet sind, zu einer Ausrichtung gedreht werden können, in der die erste Regionsoberfläche relativ nahe zur Betrachtungsoberfläche (605) und die zweite Regionsoberfläche relativ entfernt von der Betrachtungsoberfläche (605) liegt,

charakterisiert durch eine einzige Schicht, die im Wesentlichen parallel zur Betrachtungsoberfläche (605) eines Abschnitts des Substrats ist, die einzige Schicht eine Bereichsausdehnung hat und die Bereichsausdehnung mindestens so ausgedehnt wie der Abschnitt des Substrats ist,

die Partikel (601) der Schicht in der Schicht auf eine Weise angeordnet sind, dass über im Wesentlichen die gesamte Ausdehnung der Schicht ein Liniensegment, das lotrecht zur Betrachtungsoberfläche (605) von jedem gegebenen Punkt auf der Betrachtungsoberfläche konstruiert ist und sich gegen die Schicht und weiter durch die Schicht hindurch erstreckt, höchstens ein Partikel (601) der Schicht schneidet, bevor es die Schicht verläßt, und

jedes Partikel (601) der Schicht einen projizierten Bereich (d) hinsichtlich der Betrachtungsoberfläche (605) hat, der projizierte Bereich (d) derjenige Bereich der Betrachtungsoberfläche (605) ist, der durch eine Projektion der ersten Regionsoberfläche des Partikels auf die Betrachtungsoberfläche (605) abgedeckt wird, wenn das Partikel (601) drehbar derart ausgerichtet wird, dass die erste Regionsoberfläche des Partikels am nächsten zu der Betrachtungsoberfläche liegt, und

die Partikel (601) der Schicht hinreichend nahe zueinander in der Schicht liegen, dass die Summe der projizierten Bereiche (d) der Partikel der Schicht zwei Drittel des Bereichs der Oberfläche (605) des Abschnitts des Substrats (602) übersteigt, über den sich die Schicht wirklich erstreckt.

7. Material nach irgendeinem der Ansprüche 1 bis 6, wobei

die Vielzahl der Partikel (601) eine Menge der Partikel enthält, die am nächsten zur Substratoberfläche (605) liegt, die Partikel der Menge im Wesentlichen eine einzige Schicht bilden,

jedes Partikel (601) in der Schicht einen Mittelpunkt hat, im Wesentlichen kein Partikel (601) in der Schicht vollständig hinter dem Mittelpunkt irgendeines benachbarten Partikels (601) in der Schicht hinsichtlich der Substratoberfläche (605) angeordnet ist,

jedes Partikel (605) in der Schicht einen projizierten Bereich (d) hinsichtlich der Substratoberfläche (605) hat, die Partikel (601) der Menge hinreichend dicht gepackt sind hinsichtlich eines anderen in der Schicht, so dass die Vereinigung ihrer projizierten Bereiche zwei Drittel des Bereichs der Substratoberfläche (605) übersteigt.

8. Material nach irgendeinem der Ansprüche 1 bis 7, wobei das optisch durchlässige Substrat (602) eine optisch durchlässige Oberfläche für den Eintritt von Licht in das Material und eine optisch durchlässige Oberfläche für den Austritt von Licht aus dem Material hat, die optisch durchlässigen Oberflächen ein und dieselbe Oberfläche ist; und

eine Vielzahl optisch modulierender Elemente (602), die in dem Substrat angeordnet sind und von denen jedes Element ein optisch anisotropes Partikel (601) enthält, das drehbar ist, um erste und zweite optische Modulationsaspekte zur Lichteintrittsoberfläche hin zu präsentieren, und wobei jedes Partikel (601) eine bevorzugte Drehungsausrichtung hinsichtlich der Lichteintrittsoberfläche ausweist,

jedes Partikel (601) eine Anisotropie hat für das Vorsehen eines elektrischen Dipolmoments, das elektrische Dipolmoment das Partikel (601) elektrisch reagierend macht, dass dann, wenn das Partikel (601) drehbar in einem elektrischen Feld angeordnet ist, während das elektrische Dipolmoment vorgesehen ist, das Partikel (601) dazu tendiert, zu einer Ausrichtung hin zu drehen, in der das elektrische Dipolmoment auf das elektrische Feld ausgerichtet ist,

die modulierenden Elemente hinsichtlich der Lichteintrittsoberfläche und der Lichtaustrittsoberfläche so liegen, dass Licht in den Apparat über einen Abschnitt der Lichteintrittsoberfläche eindringen kann und von einer Menge der modulierenden Elemente in dem Apparat moduliert wird, und optional mindestens ein Teil des so modulierten Lichts den Apparat über mindestens einen Abschnitt der Lichtaustrittsoberfläche verlassen kann, und

die modulierenden Elemente der Menge das Licht modulieren, das sie beleuchtet, wenn die Partikel der modulierenden Elemente der Menge in ihrer bevorzugten Drehausrichtung sind, so dass mindestens 15% des auf den Abschnitt der Lichteintrittsoberfläche einfallenden Lichts letztendlich durch die Lichtaustrittsoberfläche austritt, nach Messung durch eine integrierende Kugeltechnik.

9. Anzeigeapparat, das ein Material nach irgendeinem der vorstehenden Ansprüche enthält.

**Revendications**

1. Matière comprenant :

un substrat optiquement transmissif (602) ; et

une pluralité de particules optiquement anisotropes (601) disposées sensiblement dans une mono couche dans le substrat (602), les particules étant serrées étroitement les unes contre les autres dans la mono couche, une disposition rotative de chaque particule (601) pouvant être obtenue pendant que ladite particule (601) est disposée ainsi dans le substrat, ladite particule (601), lorsqu'elle se trouve dans ladite disposition rotative, n'étant pas rattachée au substrat (602).

2. Matière selon la revendication 1,
la pluralité de particules comprenant une première (201) et une seconde (1215) populations de particules ;
les particules de la première population (1201) telles que prises en considération en elles-mêmes sans les particules de la seconde population (1215) étant disposées dans le substrat (1202) suivant un agencement étroitement serré ayant des interstices (907) ;
les particules de la seconde population (1215) étant disposées dans les interstices (907) de l'agencement de la première population (1201) de particules.

3. Matière selon la revendication 1,
la pluralité de particules comprenant une première (1201) et une seconde populations (1215) de particules,
les particules de la première population (1201) telles que prises en considération en elles-mêmes dans les particules de la seconde population (1215) étant disposées dans le substrat (1202) suivant un agencement comprenant sensiblement une couche unique de particules (P1), la couche étant formée des particules situées le plus près de la surface du substrat parmi toutes les particules de la première population (1201),

chaque particule dans la couche (1201) ayant un point central, sensiblement aucune particule dans la couche (1201) n'étant disposée complètement derrière le point central d'une particule voisine quelconque la plus proche dans la couche (1201) par rapport à la surface du substrat (1705),
chaque particule dans la couche (1201) ayant une surface de projection (d) par rapport à la surface du substrat (1705), les particules de la couche (1201) étant suffisamment serrées étroitement les unes contre les autres dans la couche pour que la réunion de leurs surfaces de projection (d) excède deux tiers de l'étendue de la surface du substrat (1705),
les particules de la seconde population (1215) étant situées parmi les particules de la première population (1201) de telle façon que la lumière incidente sur une partie du substrat et qui est transmise à travers celui-ci vers les particules de la pluralité au voisinage de ladite partie illumine les particules des deux populations audit voisinage et est modulée par celles-ci, les particules de la seconde population audit voisinage modulant de ce fait la lumière qui a part cela, sauf en ce qui concerne la présence des particules de la seconde population (1215), traverseraient la couche en passant entre les particules de la première population (1201).

4. Matière selon la revendication 2 ou 3, dans laquelle :

les particules de la première population (1201) ont une première taille sensiblement uniforme **caractérisée par** une première dimension linéaire ;

les particules de la seconde population (1215) ont une seconde taille sensiblement uniforme **caractérisée par** une seconde dimension linéaire inférieure à la première dimension linéaire ; et

les particules de la première (1201) et de la seconde (1215) populations ont des anisotropies optiques similaires.

5. Matière selon l'une quelconque des revendications 1 à 4, dans laquelle :

le substrat (602) comprend une surface de visualisation (605), les particules de la mono couche (601) étant disposées derrière la surface de visualisation (605) par rapport à un observateur (1) situé de manière favorable pour observer la surface de visualisation (605), les particules (601) pouvant de ce fait être observées par l'observateur (1) à travers la surface de visualisation (605),

chaque particule (601) ayant une anisotropie destinée à créer un moment électrique dipolaire, le moment électrique dipolaire rendant la particule électriquement sensible de telle façon que lorsque la particule est disposée dans un champ électrique de manière à pouvoir tourner, tandis que le moment électrique dipolaire de la particule est créé, la particule a tendance à tourner vers une orientation dans laquelle le moment électrique dipolaire s'aligne avec le champ ;

un moyen de maintien en place par rapport à la surface de visualisation des particules ainsi disposées ; et

un moyen destiné à faciliter une rotation d'au moins l'une des particules ainsi disposée en appliquant de manière sélective un champ électrique à une particule pour laquelle le moment électrique dipolaire est créé.

**6.** Matière selon l'une quelconque des revendications 1 à 5,

chaque particule (601) comprenant une première et une seconde régions constitutives, associées, respectivement, à la première et à la seconde caractéristiques de modulation optique, la première région constitutive possédant une première surface de région, la seconde région constitutive possédant une seconde surface de région, la première et la seconde surfaces de région étant disposées l'une par rapport à l'autre de telle façon que la particule (601), lorsqu'elle est disposée dans le substrat de manière à pouvoir tourner, peut être mise en rotation jusqu'à une orientation dans laquelle la première surface de région est relativement proximale par rapport à la surface de vision (605) et la seconde surface de région est relativement distale par rapport à la surface de vision (605),

**caractérisée en ce que** la mono couche est sensiblement parallèle à la surface de vision (605) d'une partie du substrat, la mono couche ayant une étendue élémentaire, l'étendue élémentaire étant coextensive avec au moins ladite partie du substrat,

les particules (601) de la couche étant disposées dans la couche d'une manière telle que sur sensiblement la totalité de l'étendue élémentaire de la couche, un segment de ligne construit perpendiculairement à la surface de vision (605) à partir d'un point donné quelconque sur la surface de vision (605) et qui s'étend vers la couche et en outre qui s'étend à travers la couche croise au moins une particule (601) de la couche avant de quitter la couche,

chaque particule (601) de la couche ayant une surface de projection (d) par rapport à la surface de vision (605), la surface de projection (d) étant la surface de la surface de vision (605) qui est recouverte par une projection de ladite première surface de région de particule sur la surface de région (605) lorsque ladite particule (601) est orientée en rotation de telle façon que ladite première surface de région de particule est proximale au maximum de la surface de région,

les particules (601) de la couche étant situées suffisamment près les unes des autres dans la couche de telle façon que la somme des surfaces de projection (d) des particules de la couche excèdent deux tiers de la superficie de la surface (605) de ladite partie du substrat (602) sur toute la longueur sur laquelle s'étend réellement la couche.

**7.** Matériel selon l'une quelconque des revendications 1 à 6,

la pluralité de particules (601) comprenant un ensemble de particules situées plus près de la surface de substrat (605), les particules de l'ensemble formant sensiblement une couche unique,

chaque particule (601) dans la couche ayant un point central, sensiblement aucune particule (601) dans la couche n'étant disposée complètement derrière le point central d'une particule voisine quelconque la plus proche (601) dans la couche par rapport à la surface de substrat (605),

chaque particule (605) dans la couche ayant une surface de projection (d) par rapport à la surface de substrat (605), les particules (601) de l'ensemble étant suffisamment étroitement serrées les unes contre les autres dans la couche pour que la réunion de leurs surfaces de projection excède deux tiers de la superficie de la surface du substrat (605).

**8.** Matière selon l'une quelconque des revendications 1 à 7, dans laquelle le substrat optiquement transmissif (602) possède une surface optiquement transmissive destinée à l'entrée de lumière dans la matière et une surface optiquement transmissive destinée à la sortie de la lumière de la matière, les surfaces optiquement transmissives étant de manière optionnelle l'une et la même surface ; et

une pluralité d'éléments de modulation optique (602) disposés dans le substrat, chaque élément comprenant une particule optiquement anisotrope (601) pouvant être mise en rotation pour présenter le premier et le second aspects de la modulation optique vers la surface d'entrée de lumière, chaque particule (601) ayant une orientation rotationnelle préférée par rapport à la surface d'entrée de lumière,

chaque particule (601) ayant une anisotropie destinée à créer un moment électrique dipolaire, le moment électrique dipolaire rendant la particule (601) électriquement sensible de sorte que lorsque la particule (601) est installée de façon à pouvoir tourner dans un champ électrique alors que le moment électrique dipolaire est créé, la particule (601) a tendance à tourner jusqu'à une orientation dans laquelle le moment électrique dipolaire s'aligne avec le champ électrique,

les éléments de modulation étant situés par rapport à la surface d'entrée de lumière et à la surface de sortie de lumière de telle façon que la lumière peut entrer dans l'appareil par l'intermédiaire d'une partie de la surface d'entrée de lumière et être modulée par un ensemble d'éléments de modulation dans l'appareil et optionnellement au moins une partie de la lumière ainsi modulée peut sortir de l'appareil par l'intermédiaire d'au moins une partie de la surface de sortie de lumière,

les eléments de modulation de l'ensemble modulant la lumière qui illumine celles-ci lorsque les particules des éléments de modulation de l'ensemble se trouvent dans leurs orientations rotationnelles préférées de sorte qu'au moins 15 pour cent de la lumière incidente sur ladite partie de la surface d'entrée de lumière sort finalement à travers la surface de lumière telle que mesurée par une technique d'intégration de sphère.

9. Appareil d'affichage comprenant une matière selon l'une quelconque des revendications précédentes.

FIG. 1
(PRIOR ART)

EP 0 862 773 B1

EP 0 862 773 B1

FIG. 2(a)
(PRIOR ART)

211    212

217

218

210    219

FIG. 2(b)
(PRIOR ART)

221    222

227

228

220    229

FIG. 2(c)
(PRIOR ART)

231    232

230

FIG. 3(a)

325

L

310

$T_1$

331

332

333

334

300

FIG. 3(b)

326 L

310

$T_2$

331

332

300

FIG. 3(c)

327 L

310

$T_3$

331

333

300

FIG. 3(d)

L

328

310

331

332

333

$T_4$

334

300

EP 0 862 773 B1

FIG. 4(a)

FIG. 4(b)

FIG. 4(c)

FIG. 4(d)

FIG. 5(a)

FIG. 5(b)

FIG. 5(c)

FIG. 5(d)

FIG. 6

EP 0 862 773 B1

FIG. 7

*FIG. 8*

EP 0 862 773 B1

FIG. 9

FIG. 10

FIG. 11(a)

1102

1101

P

FIG. 11(b)

1102

1101

FIG. 11(c)

1102'

1101

P

FIG. 11(d)

1102'

1101

FIG. 11(e)

1102"

1101

P

FIG. 11(f)

1102"

1101

EP 0 862 773 B1

FIG. 12

EP 0 862 773 B1

FIG. 13

FIG. 14(a)

FIG. 14(b)

EP 0 862 773 B1

WHITE (d = 90~106 μm)

FIG. 15

FIG. 16

$$\alpha = \frac{\sum_{j=1}^{4} a_j}{A}$$

EP 0 862 773 B1

*FIG. 17(a)*

d

C

1705

1703

1701

D>C

D

*FIG. 17(b)*

d

C

1705

1703

1701

D'=C

D'

EP 0 862 773 B1

FIG. 18

FIG. 19

FIG. 20

θ = π/3

θ = π/2

θ = π/4

**FIG. 21**

EP 0 862 773 B1